# EUROPEAN PATENT SPECIFICATION

(11) **EP 3 159 287 B1**
(45) Date of publication and mention of the grant of the patent: **11.09.2019**
(21) Application number: 16188635.3
(22) Date of filing: 15.12.2011
(51) Int. Cl.: B65G 1/04

(54) **METHOD FOR BOT PAYLOAD ALIGNMENT AND SENSING**
VERFAHREN ZUM AUSRICHTEN UND MESSEN EINER ROBOTERNUTZLAST
PROCÉDÉ DE DÉTECTION ET D'ALIGNEMENT DE CHARGE UTILE DE ROBOT

(30) Priority: 15.12.2010 US 423388 P; 15.12.2010 US 423365 P; 15.12.2010 US 423220 P
(43) Date of publication of application: 26.04.2017
(62) Divisional of application: 14192118.9
(73) Proprietor: Symbotic LLC, Wilmington, MA 01887-4442 (US)
(72) Inventor: TOEBES, Stephen, Chelmsford, MA, 01824 (US); SULLIVAN, Robert, Wilmington, MA 01887 (US); BUZAN, Forrest, Dunstable, MA, 01827 (US)
(74) Representative: Ipside

(56) References cited:
- WO-A1-2010/118412

## Description

### BACKGROUND

### 1. Field

The present invention concerns methods related to storage and retrieval systems and, more particularly, to autonomous transports of the storage and retrieval systems.

### 2. Brief Description of Related Developments

Warehouses for storing case units may generally comprise a series of storage racks that are accessible by transport devices such as, for example, fork lifts, carts and elevators that are movable within aisles between or along the storage racks or by other lifting and transporting devices. These transport devices may be automated or manually driven. Generally the items transported to/from and stored on the storage racks are contained in carriers, for example storage containers such as trays, totes or shipping cases, or on pallets.

When transporting the cases to and from the storage racks with automated transports it would be advantageous to be able to locate the cases relative to the automated transport while holding the case securely during transport. It would also be advantageous to be able to minimize the number of drive motors of the automated transports and to control fingers of the automated transports' transfer arm for picking and placing case units to storage locations or conveyor locations. It would be further advantageous to be able to control fingers of the automated transports' transfer arms with a simplified drive system for picking and placing case units to storage locations or conveyor locations. Document WO2010/118412 A1 describes a method providing an autonomous transport robot for transporting a payload within a storage and retrieval system, the autonomous transport robot including a payload bed having an opening and an effector for transferring the payload to and from the payload bed at least partly through the opening.

The present invention is defined according to the attached claim 1 and additional features are defined in the dependent clams.

### BRIEF DESCRIPTION OF THE DRAWINGS

The foregoing aspects and other features of the disclosed embodiments are explained in the following description, taken in connection with the accompanying drawings, wherein:
Fig. 1 schematically illustrates an exemplary storage and retrieval system in accordance with an aspect of the disclosed embodiment;
Fig. 2 illustrates a schematic plan view of an exemplary storage and retrieval system in accordance with an aspect of the disclosed embodiment;
Fig. 3 illustrates a structural portion of a storage and retrieval system in accordance with an aspect of the disclosed embodiment;
Figs. 4A, 4B and 4C illustrate storage shelves in accordance with aspects of the disclosed embodiment;
Fig. 5 is an illustration of the exemplary autonomous transport vehicle in accordance with an aspect of the disclosed embodiment;
Fig. 6 is a schematic illustration of a portion the exemplary autonomous transport vehicle of Fig. 5 in accordance with an aspect of the disclosed embodiment;
Fig. 7A is a schematic illustration of a portion the exemplary autonomous transport vehicle of Fig. 5 in accordance with an aspect of the disclosed embodiment;
Fig. 7B is another schematic illustration of a portion the exemplary autonomous transport vehicle of Fig. 5 in accordance with an aspect of the disclosed embodiment;
Fig. 7C is an illustration of the exemplary autonomous transport vehicle in accordance with an aspect of the disclosed embodiment;
Fig. 8 is a schematic illustration of a portion the exemplary autonomous transport vehicle of Fig. 5 in accordance with an aspect of the disclosed embodiment;
Fig. 9 is a schematic illustration of a portion the exemplary autonomous transport vehicle of Fig. 5 in accordance with an aspect of the disclosed embodiment;
Fig. 10 is an illustration of a portion of the exemplary autonomous transport vehicle of Fig. 5 in accordance with an aspect of the disclosed embodiment;
Fig. 11 is a flow diagram in accordance with an aspect of the disclosed embodiment;
Figs. 12, 13A, 13B and 14 are schematic illustrations of portions of the exemplary autonomous transport vehicle of Fig. 5 in accordance with aspects of the disclosed embodiment and Fig. 13C is a flow diagram in accordance with an aspect of the disclosed embodiment;
Figs. 15A and 15B are schematic illustrations of portions of the exemplary autonomous transport vehicle of Figs. 5 in accordance with aspects of the disclosed embodiment;
Fig. 16 is a schematic illustration of the interface between a transfer arm of the autonomous transport vehicle of Figs 5 and a shelf of a conveyor in accordance with an aspect of the disclosed embodiment;
Figs. 17A and 17B are schematic illustrations of autonomous transport vehicle tilt detection in accordance with aspects of the disclosed embodiment; and
Fig. 18 is a flow diagram in accordance with an aspect of the disclosed embodiment.

### DETAILED DESCRIPTION

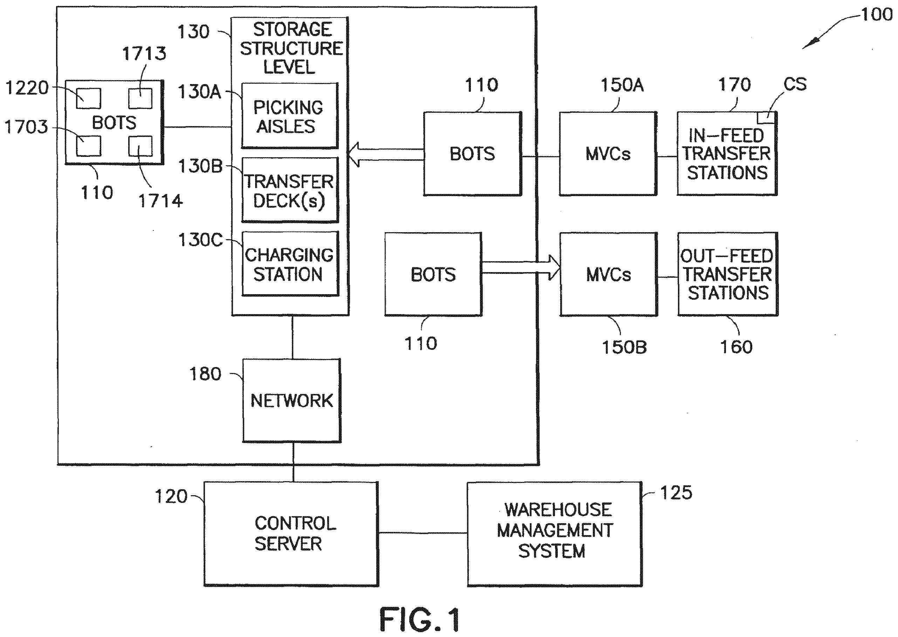

Figure 1 schematically illustrates an exemplary storage and retrieval system. Although the disclosed examples will be described with reference to what is shown in the drawings, it should be understood that the disclosed examples can be embodied in many alternate forms. In addition, any suitable size, shape or type of elements or materials could be used. The invention is only described by the embodiments defined in the appended claims.

The storage and retrieval system 100 may be substantially similar to that described in, for example, United States Patent Application Number 12/757,381, entitled "STORAGE AND RETRIEVAL SYSTEM" and filed on April 9, 2010, and United States Provisional Patent Application number 61/423,340 entitled "Warehousing Scalable Storage Structure" with Attorney Docket Number 1127P014551-US (-#1) and filed on December 15, 2010 (now US Pat. App. No. 13/326,674 with 1127P014551-US (PAR) filed on December 15, 2011), the disclosures of which may operate in a retail distribution center or warehouse to, for example, fulfill orders received from retail stores for case units (where case units as used herein means items not stored in trays, on totes or on pallets, e.g. uncontained or items stored in trays, totes or on pallets). It is noted that the case units may include cases of items (e.g. case of soup cans, boxes of cereal, etc.) or individual items that are adapted to be taken off of or placed on a pallet. Shipping cases or case units (e.g. cartons, barrels, boxes, crates, jugs, totes, pallets or any other suitable device for holding case units) may have variable sizes and may be used to hold items in shipping and may be configured so they are capable of being palletized for shipping. It is noted that when, for example, bundles or pallets of case units arrive at the storage and retrieval system the content of each pallet may be uniform (e.g. each pallet holds a predetermined number of the same item - one pallet holds soup and another pallet holds cereal) and as pallets leave the storage and retrieval system the pallets may contain any suitable number and combination of different items (e.g. each pallet may hold different types of items - a pallet holds a combination of soup and cereal). Alternatively the storage and retrieval system described herein may be applied to any environment in which case units are stored and retrieved.

The storage and retrieval system 100 may be configured for installation in, for example, existing warehouse structures or adapted to new warehouse structures. The storage and retrieval system may include in-feed and out-feed transfer stations 170, 160, multilevel vertical conveyors 150A, 150B, a storage structure 130, and a number of autonomous transport vehicles or robots 110 (referred to herein as "bots"). The storage and retrieval system may also include robot or bot transfer stations (as described in, for example, United States Patent Application Number 12/757,220, entitled "STORAGE AND RETRIEVAL SYSTEM" and filed on April 9, 2010) that may provide an indirect interface between the bots 110 and the multilevel vertical conveyor 150A, 150B. The in-feed transfer stations 170 and out-feed transfer stations 160 may operate together with their respective multilevel vertical conveyors 150A, 150B for bi-directionally transferring case units to and from one or more levels of the storage structure 130. It is noted that while the multilevel vertical conveyors are described herein as being dedicated inbound or in-feed conveyors 150A and outbound or out-feed conveyors 150B, each of the conveyors 150A, 150B may be used for both inbound and outbound transfer of case units/items from the storage and retrieval system. The multilevel vertical conveyors may be any suitable lifting devices for transporting case units between levels of the storage and retrieval system. It is noted that while multilevel vertical conveyors are described herein in other aspects the conveyors may be any suitable conveyors or transfer/picking devices having any suitable transport path orientation. Some non-limiting suitable examples of multilevel vertical conveyors can be found in, for example, United States Patent Application Number 12/757,354, entitled "LIFT INTERFACE FOR STORAGE AND RETRIEVAL SYSTEMS" and filed on April 9, 2010, and United States Provisional Patent Application Number 61/423,298 entitled "LIFT INTERFACE FOR STORAGE AND RETRIEVAL SYSTEMS" with Attorney Docket Number 1127P014525-US (-#1) and filed on December 15, 2010 (now US Pat. App. No. 13/327,088 with Attorney Docket Number 1127P014525-US (PAR) filed on December 15, 2011), and United States Patent Application Number 12/757,220, entitled "STORAGE AND RETRIEVAL SYSTEM," For example, the multilevel vertical conveyors may have any suitable number of support shelves for transporting the case units to a predetermined level of the storage and retrieval system. The support shelves may have slatted supports configured to allow fingers of the bots 110 or in-feed/out-feed transfer stations 170, 160 to pass between the slats for transferring case units to and from the conveyor. It is noted that transfer of case units between the bots and the multilevel vertical conveyors may occur in any suitable manner.

As may be realized, the storage and retrieval system 100 may include multiple in-feed and out-feed multilevel vertical conveyors 150A, 150B that are accessible by, for example, bots 110 on each level of the storage and retrieval system 100 so that one or more case unit(s) can be transferred from a multilevel vertical conveyor 150A, 150B to each storage space on a respective level and from each storage space to any one of the multilevel vertical conveyors 150A, 150B on a respective level. The bots 110 may be configured to transfer the case units between the storage spaces and the multilevel vertical conveyors with one pick (e.g. substantially directly between the storage spaces and the multilevel vertical conveyors). By way of further example, the designated bot 110 picks the case unit(s) from a shelf of a multilevel vertical conveyor, transports the case unit(s) to a predetermined storage area of the storage structure 130 and places the case unit(s) in the predetermined storage area (and vice versa).

The bots 110 may be configured to place case units, such as the above described retail merchandise, into picking stock in the one or more levels of the storage structure 130 and then selectively retrieve ordered items for shipping the ordered items to, for example, a store or other suitable location. The bots 110 may interface in any suitable manner with the multilevel vertical conveyors 150A, 150B such as through, for example, extension of a transfer arm or effector 1540A of the bot (which may have fingers for interfacing with slatted support shelves of the multi-level vertical conveyors) relative to a frame of the bot. Suitable examples of bots are described in United States Patent Application Number 12/757,312, entitled "AUTONOMOUS TRANSPORTS FOR STORAGE AND RETRIEVAL SYSTEMS" and filed on April 9, 2010, United States Provisional Patent Application number 61/423,365 entitled "AUTOMATED BOT WITH TRANSFER ARM" with Attorney Docket Number 1127P014264-US (-#1) and filed on December 15, 2010 (now US Pat. App. No. 13/326,952 with Attorney Docket Number 1127P014264-US (PAR) filed on December 15, 2011), United States Provisional Patent Application number 61/423,388 entitled "AUTOMATED BOT TRANSFER ARM DRIVE SYSTEM" with Attorney Docket Number 1127P014265-US (-#1) and filed on December 15, 2010 (now US Pat. App. No. 13/326,993 with Attorney Docket Number 1127P014265-US (PAR) filed on December 15, 2011), United States Provisional Patent Application number 61/423,359 entitled "BOT HAVING HIGH SPEED STABILITY" with Attorney Docket Number 1127P014266-US (-#1) and filed on December 15, 2010 (now US Pat. App. No. 13/326,447 with Attorney Docket Number 1127P014266-US (PAR) filed on December 15, 2011), and United States Provisional Patent Application number 61/423,206 entitled "BOT SENSING POSITION" with Attorney Docket Number 1127P014267-US (-#1) and filed on December 15, 2010 (now US Pat. App. No. 13/327,035 with Attorney Docket Number 1127P014267-US (PAR) filed on December 15, 2011)

The storage structure 130 may include multiple levels of storage rack modules where each level includes an array of storage spaces (arrayed on the multiple levels and in multiple rows on each level), picking aisles 130A formed between the rows of storage spaces, and transfer decks 130B. It is noted that, each level may also include respective bot transfer stations for providing an indirect interface between the bots and the multilevel vertical conveyors. The picking aisles 130A and transfer decks 130B may be arranged for allowing the bots 110 to traverse respective levels of the storage structure 130 for placing case units into picking stock and to retrieve the ordered case units. As may be realized, the storage and retrieval system may be configured to allow random accessibility to the storage spaces. For example, all storage spaces in the storage structure 130 may be treated substantially equally when determining which storage spaces are to be used when picking and placing case units from/to the storage structure 130 such that any storage space of sufficient size can be used to store items. The storage structure 130 may also be arranged such that there is no vertical or horizontal array partitioning of the storage structure. For example, each multilevel vertical conveyor 150A, 150B is common to all storage spaces (e.g. the array of storage spaces) in the storage structure 130 such that any bot 110 can access each storage space and any multilevel vertical conveyor 150A, 150B can receive case units from any storage space on any level so that the multiple levels in the array of storage spaces substantially act as a single level (e.g. no vertical partitioning). The multilevel vertical conveyors 150A, 150B can also receive case units from any storage space on any level of the storage structure 130 (e.g. no horizontal partitioning). It is also noted that the storage and retrieval system may be configured so that each multilevel vertical conveyor serves a predetermined area of the array of storage spaces.

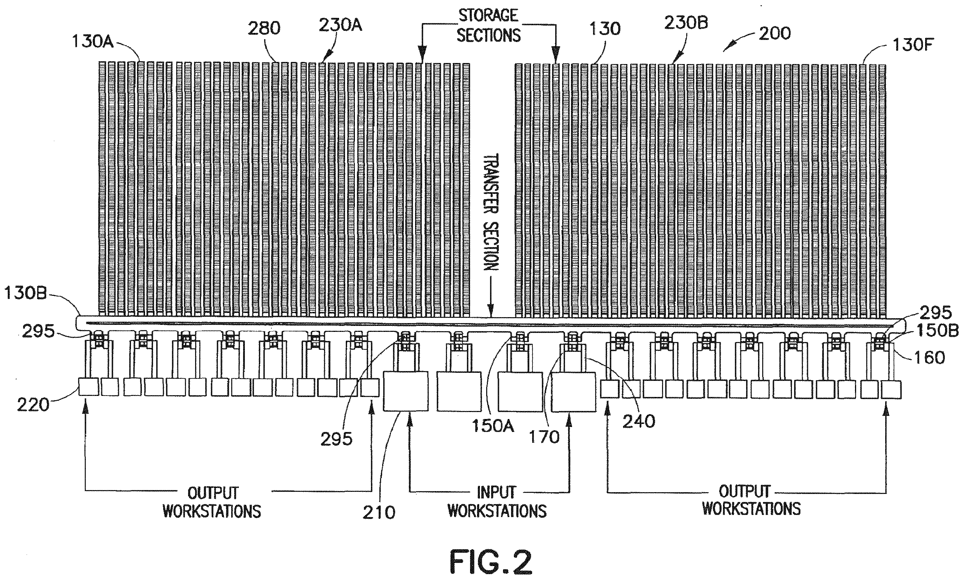

The storage structure 130 may also include charging stations 130C for replenishing, for example, a battery pack of the bots 110. The charging stations 130C may be located at, for example, transfer areas 295 (Fig. 2) of the transfer deck 130B so that the bots 110 can substantially simultaneously transfer items, for example, to and from a multilevel vertical conveyor 150A, 150B while being charged. The bots 110 and other suitable features of the storage and retrieval system 100 may be controlled by, for example, one or more central system control computers (e.g. control server) 120 through, for example, any suitable network 180. The network 180 may be a wired network, a wireless network or a combination of a wireless and wired network using any suitable type and/or number of communication protocols. It is noted that, in the embodiments, the system control server 120 may be configured to manage and coordinate the overall operation of the storage and retrieval system 100 and interface with, for example, a warehouse management system 125, which in turn manages the warehouse facility as a whole. The control server 120 may be substantially similar to that described in, for example, United States Patent Application Number 12/757,337, entitled "CONTROL SYSTEM FOR STORAGE AND RETRIEVAL SYSTEMS" and filed on April 9, 2010.

Referring also to Fig. 2, an exemplary configuration of the storage and retrieval system 100 is shown. Other suitable exemplary configurations of storage and retrieval systems can be found in, for example, United States Provisional Patent Application number 61/423,340 entitled "Warehousing Scalable Storage Structure" with Attorney Docket Number 1127P014551-US (-#1) and filed on December 15, 2010 (now US Pat. App. No. 13/326,674 with Attorney Docket Number 1127P014551-US (PAR) filed on December 15, 2011), and United States Patent Application Number 12/757,381, entitled "STORAGE AND RETRIEVAL SYSTEM" and filed on April 9, 2010 It should be understood that the storage and retrieval system may have any suitable configuration. As can be seen in Fig. 2, the storage and retrieval system 200 is configured, for exemplary purposes only, as a single-ended picking structure in which only one side of the system 200 has a transfer section or deck 130B. The single-ended picking structure may be used in, for example, a building or other structure having loading docks disposed only on one side of the building. The storage and retrieval system 200 includes transfer deck(s) 130B and picking aisles 130A that allow bots 110 to traverse an entirety of a level of the storage structure 130 on which that bot 110 is located for transporting items between any suitable storage locations/picking aisles 130A and any suitable multilevel vertical conveyors 150A, 150B. The multilevel vertical conveyors 150A, 150B provide transport of case units into the storage and retrieval system 200 through input workstations 210 and provide output of case units from the storage and retrieval system 200 through output workstations 220. The storage and retrieval system 200 includes a first and second storage section 230A, 230B located side by side so that the picking aisles of each section are substantially parallel with each other and facing the same direction (e.g. towards transfer deck 130B). It is noted that the storage and retrieval system may have any suitable number of storage sections arranged relative to each other in any suitable configuration.

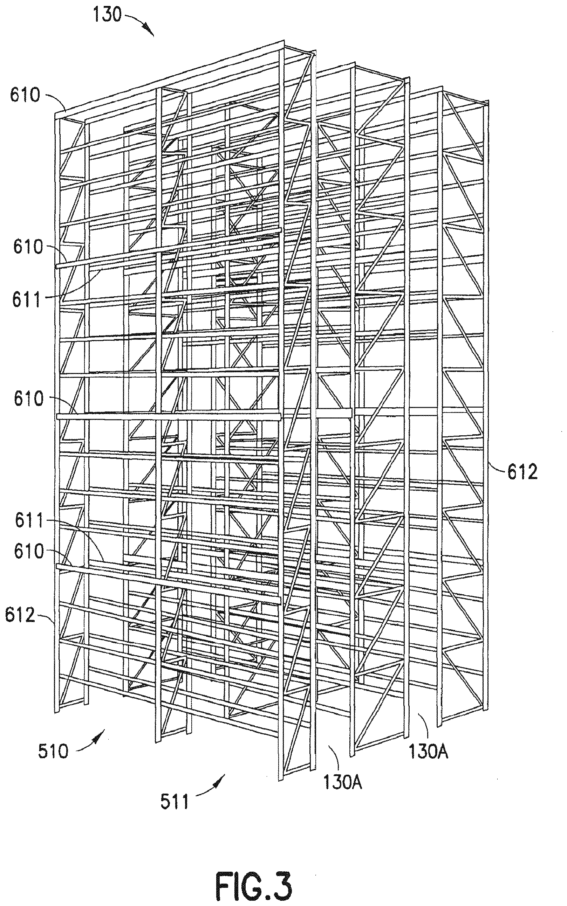

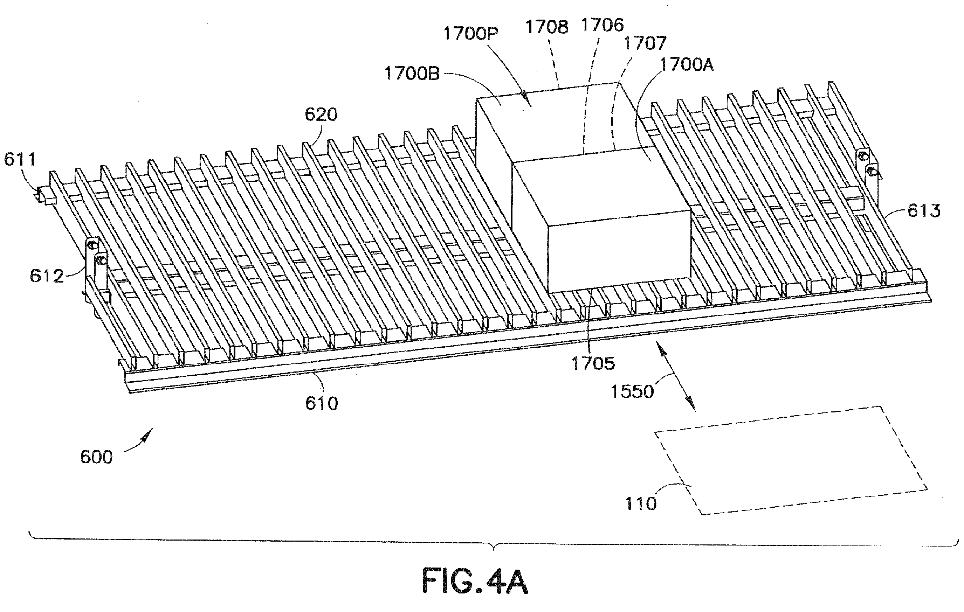

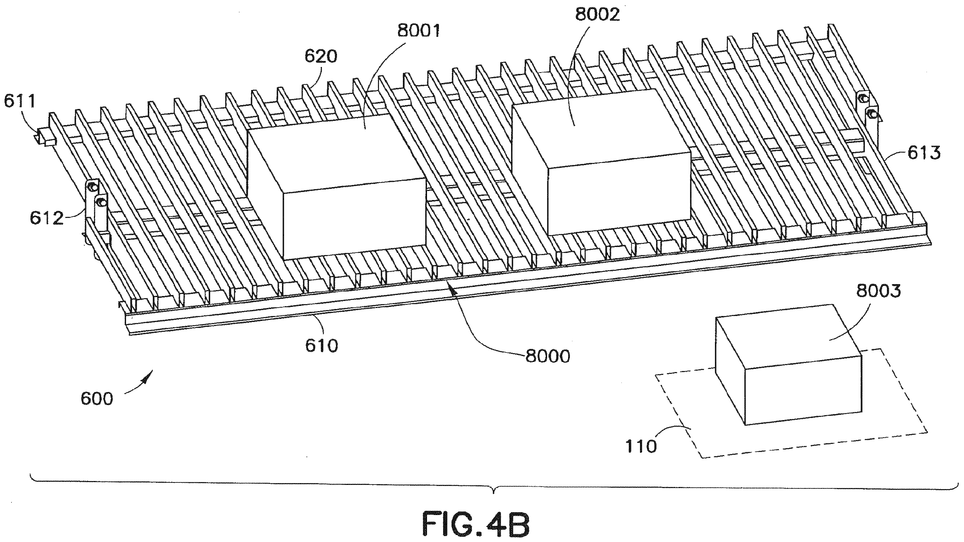

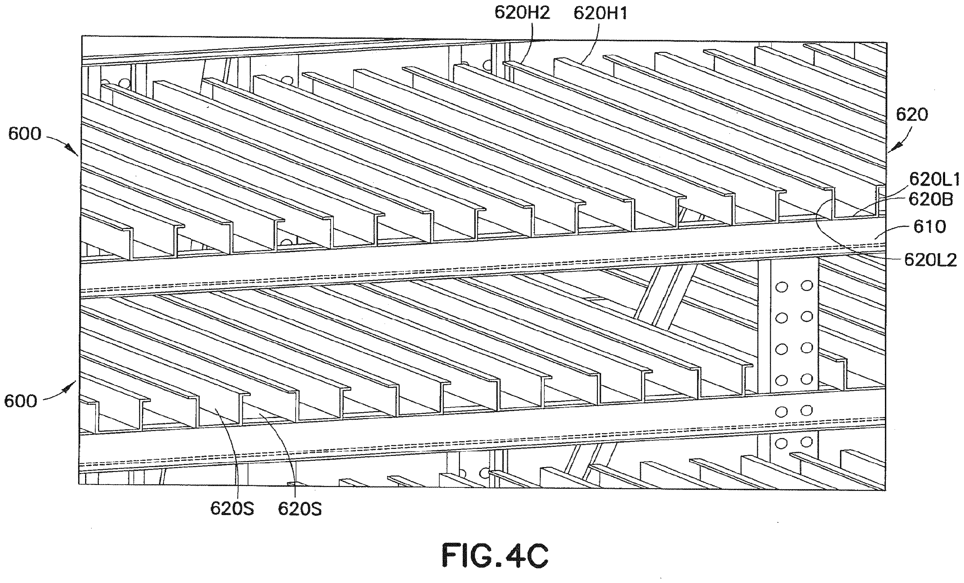

Referring to Figs. 1, 3, 4A, 4B and 4C, each of the storage bays 510, 511 of the storage structure 130 may hold the picking stock on storage shelves 600 that are separated by aisle spaces 130A. The storage bays 510, 511 and storage shelves 600 may be substantially similar to those described in, for example, United States Patent Application Number 12/757,220, entitled "STORAGE AND RETRIEVAL SYSTEM," and United States Patent Application Number 12/757,381, entitled "STORAGE AND RETRIEVAL SYSTEM". For example, the storage shelves 600 may include one or more support legs 620L1, 620L2 extending from, for example, the horizontal supports 610, 611, 613 (which are supported by vertical supports 612). The support legs 620L1, 620L2 may have any suitable configuration and may be part of, for example, a substantially U-shaped channel 620 such that the legs are connected to each other through channel portion 620B. The channel portion 620B may provide an attachment point between the channel 620 and one or more horizontal supports 610, 611, 613. It is noted that, each support leg 620L1, 620L2 may also be configured to individually mount to the horizontal supports 610, 611, 613. Each support leg 620L1, 620L2 includes a bent portion 620H1, 620H2 having a suitable surface area configured to support case units stored on the shelves 600. The bent portions 620H1, 620H2 may be configured to substantially prevent deformation of the case units stored on the shelves. It is noted that the leg portions 620H1, 620H2 may have a suitable thickness or have any other suitable shape and/or configuration for supporting case units stored on the shelves. As can be seen in Figs. 4A, 4B and 4C, the support legs 620L1, 620L2 or channels 620 may form a slatted or corrugated shelf structure where spaces 620S between, for example, the support legs 620L1, 620L2 allow for arms or fingers of the bots 110 to reach into the shelving for transferring case units to and from the shelves. It is also noted that transfer of items to and from the multilevel vertical conveyors 150A, 150B (whether the transfer is made directly or indirectly by the bot 110) may occur in a substantially similar manner to that described above with respect to the storage shelves 600. It is noted that the spacing between the case units on the shelves may be any suitable spacing. It is also noted that transfer of case units to and from the multilevel vertical conveyors 150A, 150B (whether the transfer is made directly or indirectly by the bot 110) may occur in a substantially similar manner to that described above with respect to storage shelves 600.

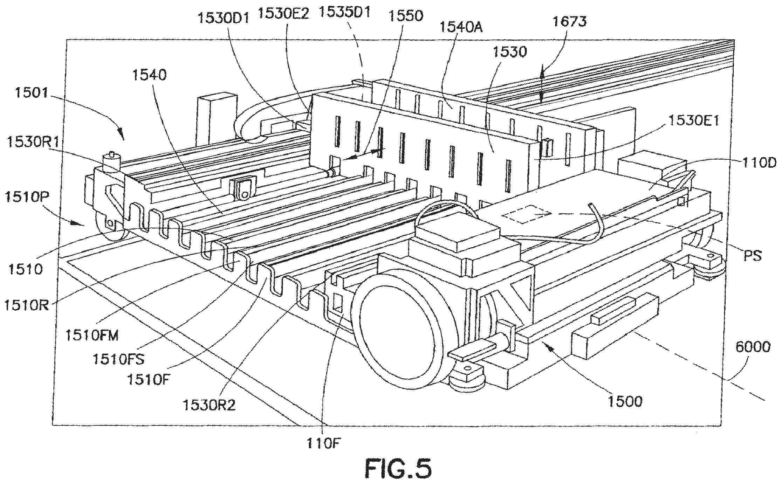

Referring to Fig. 5 an exemplary bot 110 is shown. The bot 110 includes a longitudinally extended frame 110F that has a first end 1500 and a second end 1501 where the longitudinal axis 6000 extends from the first end 1500 to the second end 1501. At least one drive section 110D may be coupled to one of the first and/or second ends 1500, 1501 in any suitable manner for driving the bot 110 along the transfer deck(s) 130B and picking aisles 130A (Fig. 1). The drive 110D may include drive wheels, tracks or any other suitable drive mechanism for effecting travel of the bot along the transfer deck(s) 130B and picking aisles 130A. The other end of the bot 110 may have any suitable supports, such as caster wheels, fixed wheels, steerable wheels, and similar mechanisms for movably supporting the bot 110 as it travels along the transfer deck(s) 130B and picking aisles 130A. The bot 110 may have any suitable controller 1220 (Fig. 1) for effecting operation of the bot 110 (as described herein) and/or communication between the bot 110 and the control server 120 (Fig. 1). As may be realized the configuration of the bot shown in the drawings is merely exemplary and it should be understood that the bot may have any suitable configuration for carrying out the detection and positioning of case units relative to the bot 110 as described herein.

Referring now to Figs. 5, 6, 7A and 7B the frame 110F of the bot 110 forms a payload bed 1510 that is configured to hold case units (or a pickface where a pickface is one or more cases that are to be picked and carried by the bot 110) or any other suitable payload. The payload bed 1510 may be suitably sized for accepting (e.g. holding) any case unit 1700 (or pickface 1700P where a pickface is one or more cases that is to be picked and carried by the bot 110) that may be transferred into or removed from the storage and retrieval system 100. For example, the payload bed 1510 may be larger than an expected pick size (i.e. larger than the pickface 1700P the bot is expected to pick from, for example, the storage shelf 600 or any other suitable component of the storage and retrieval system such as the multilevel vertical conveyors). In this example, the pickface 1700P is shown as including two case units 1700 arranged laterally with respect to longitudinal axis 6000 of the bot 110. However, the pickface may include any suitable number of case units arranged laterally, longitudinally or in a lateral/longitudinal grid pattern.

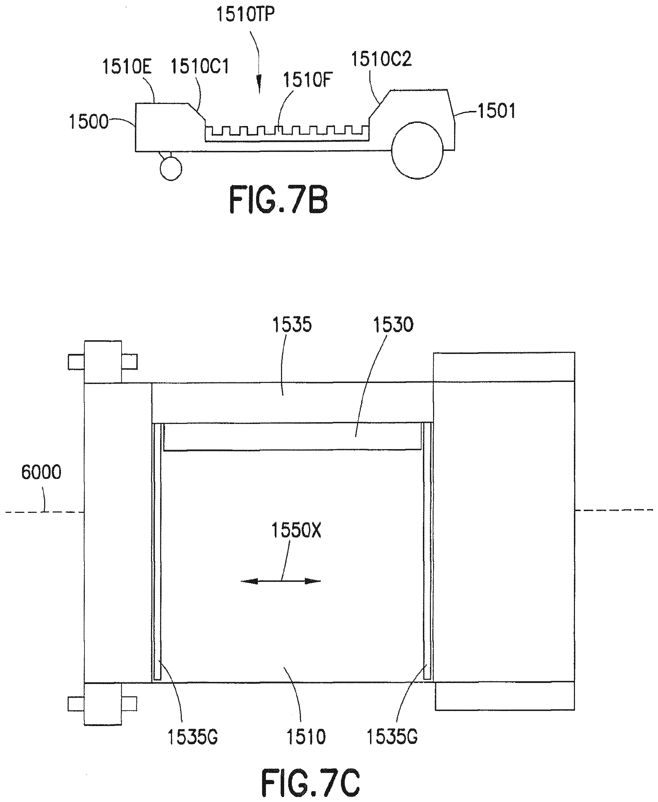

The payload bed 1510 may include any suitable guide surfaces for allowing the case units to be transferred into the payload bed 1510 without obstruction. For example, the frame 110F forming the payload bed 1510 may include one or more flanges 1510C1, 1510C2 on the sides 1510S1, 1510S2 of the payload bed 1510. In this example, the flanges 1510C1, 1510C2 may be chamfered or angled surfaces at a top opening 1510TP of the payload bed 1510. The angled surfaces substantially form a wedge shape so that on contact with an edge of the case unit during transfer of the pickface into the payload area (e.g. lowering of the case unit into the payload area in the direction of arrow 1673) the angled surfaces guide the case unit(s) 1700 of the pickface 1700P into the payload area without obstructions (e.g. the case unit(s) being snagged or otherwise caught on a portion of the bot 110). The unobstructed transfer of the case units to the bot payload area facilitates loading of the case unit in one pick (e.g. substantially without repositioning the pickface or retrying the loading of the pickface onto the bot 110). While in this example the flanges 1510C1, 1510C2 are shown as being substantially straight surfaces it should be understood that the flanges may have any suitable shape and/or configuration such as for exemplary purposes only, arcuate. Also in this example, the flanges 1510C1, 1510C2 are shown as terminating substantially at an edge 1510E of the payload area, but it should be understood that the flanges may extend past the edge 1510E. Still, the flanges may be moveable or retractable such that when case units are loaded into the payload bed 1510 the flanges are moved to extend past the edge 1510E to guide the case units into the payload area and once the case units are loaded, the flanges are retracted so they do not protrude past the edge 1510E. Also, the flanges may be pivotable between a vertically upright position and the angled position shown in, for example, Fig. 7B.

A fence 1510F may be located at a side opening 1510P of the payload bed 1510. The fence 1510F may be attached to the frame 110F in any suitable manner such as with fasteners or welding. It is noted that the fence 1510F may form part of the frame 110F or be of unitary construction with the frame 110F. The fence may include slots 1510FS disposed between stopping members 1510FM. The slots 1510FS may be configured to allow the fingers 1540 to extend through the fence 1510F between the stopping members 1510FM in a substantially lowered position so that the fingers 1540 can be, for example, extended into a storage shelf 600 below a case unit. The stopping members 1510FM may be configured to extend above the payload bed 1510 to form a barrier that substantially prevents case units from exiting the payload bed 1510 once the case units are positioned on the payload bed 1510. In this example, the number of slots 1510FS is equal to the number of fingers 1540 but alternatively, the fence 1510F may be configured such that more than one finger 1540 passes through a single slot (e.g. the number of slots is less than the number of fingers). It should be noted that the fence may also have any suitable configuration for preventing case units from exiting the payload area when the case units are carried by the bot 110. For example, the fence may be movable so that the stopping members are retractable such that when in an extended configuration the fence prevents the case units from exiting the payload area.

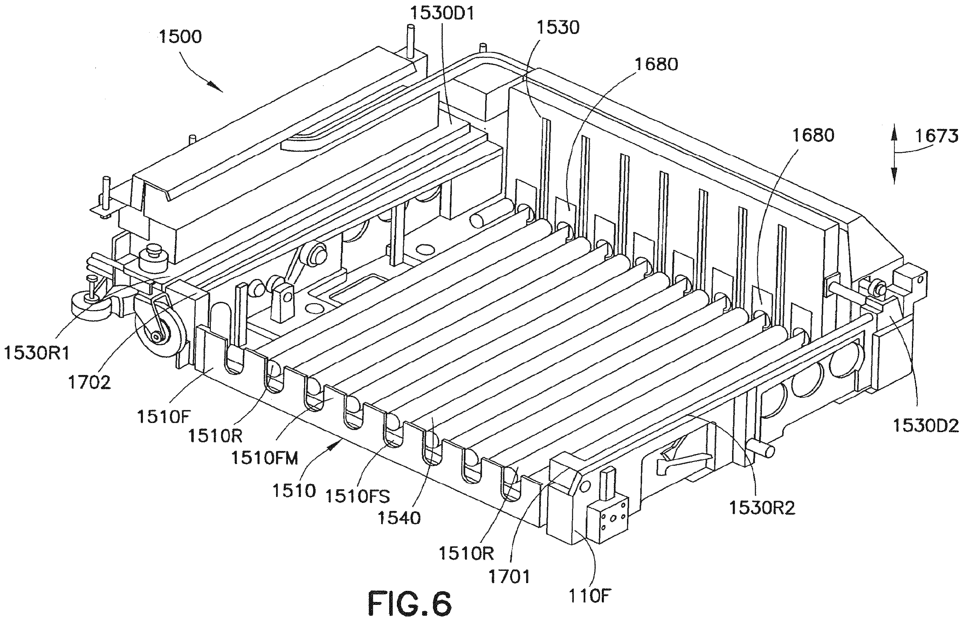

The bot 110 may include a transfer arm or end effector 1540A. Referring to Figs. 5 and 6, the transfer arm 1540A may include the fingers 1540 and a movable member 1535. The finger 1540 may extend substantially laterally relative to the longitudinal axis 6000 of the bot and be configured to interface with the slatted shelf structure of the storage shelves 600 (Figs. 4A, 4B and 4C). The fingers 1540 are capable of movement in the direction of arrow 1673 along a lift axis (e.g. in a direction substantially perpendicular to the direction 1550 of extension and retraction of the fingers) between a lowered position and a raised position. It is noted that when in a lowered position the fingers 1540 may be disposed below a surface of the payload bed 1510 or form at least a portion of the payload bed 1510. The fingers may be driven individually or in unison by any suitable drive, as described below, for lifting pickfaces disposed on the fingers over the fence 1510F and into/out of the payload bed 1510 of the bot 110.

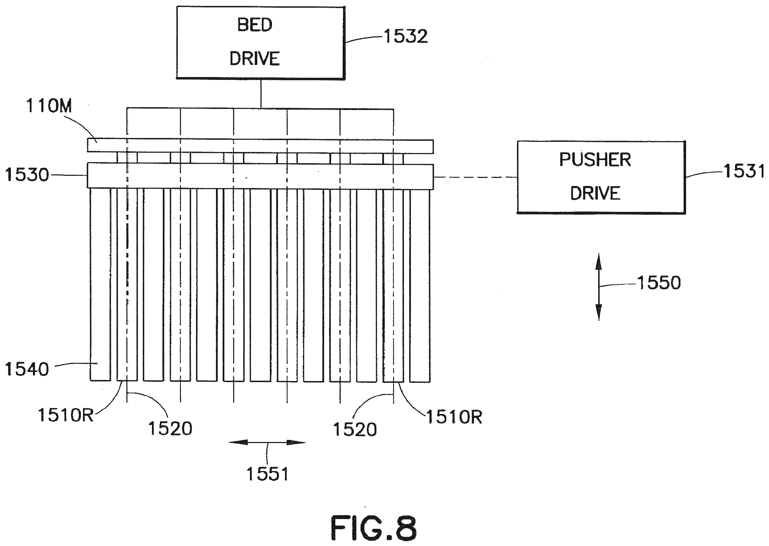

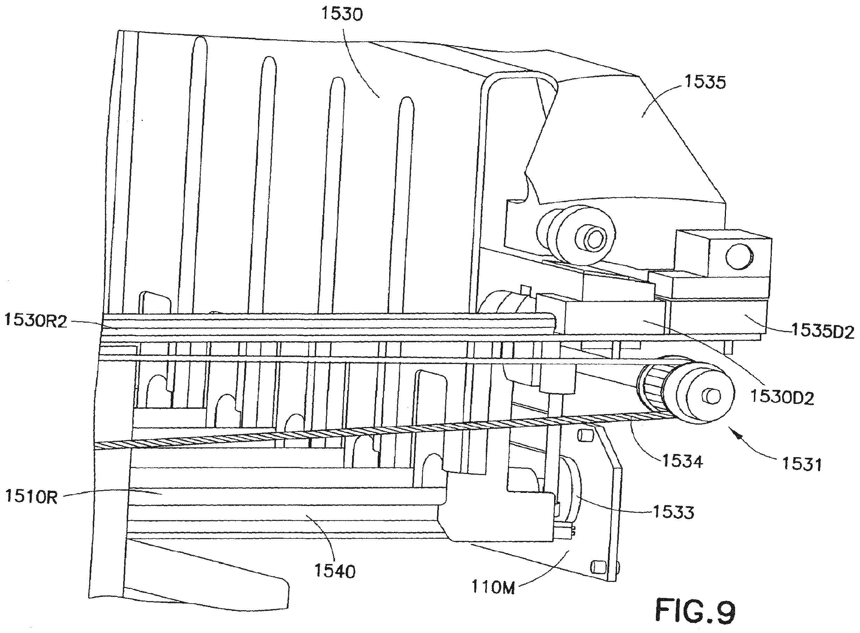

The payload bed 1510 may include any suitable payload supports for supporting the case units when the case units are carried by the bot 110. For exemplary purposes only, the payload supports may include a "fluid" (or otherwise movable) bed. One example, of the payload support surface is the roller bed described in, for example, United States Provisional Patent Application number 61/423,220 entitled "BOT PAYLOAD ALIGNMENT AND SENSING," having Attorney Docket Number 1127P014263-US (-#1) and filed on December 15, 2010 (now US Pat. App. No.13/327,040 with Attorney Docket Number 1127P014263-US (PAR) filed on December 15, 2011). For example, the bed may include rollers 1510R, where a rotational axis of each roller 1510R is disposed substantially transversely (or laterally) to the longitudinal axis 6000 of the bot 110. The payload supports may also be belts, ball bearings or any other suitable "fluid" support that moves the case units on the payload bed for at least in part justifying a location of the case unit relative to the payload bed/bot as will be described in greater detail below. Each roller may be supported within the frame 110F in any suitable manner. In this example, the rollers may be rotatably supported on one end at least in part by the fence 1510F adjacent the side opening 1510P of the payload bed 1510 and rotatably supported on the other opposite end by any suitable frame member, such as frame member 110M (Fig. 9). The rollers 1510R (or other suitable payload supports) may be inter-disposed with fingers 1540 of the bot 110 in an alternating manner. It is noted that the rollers 1510R and the fingers 1540 may be arranged relative to each other in any suitable manner. The rollers may be connected to any suitable drive 1532 (Fig. 8) for rotating the rollers 1510R about their axes for moving case units on the payload bed 1510 as will be described in greater detail below. For exemplary purposes only, the drive 1532 may be a belt and pulley drive 1533 as shown in Fig. 8 but it should be understood that the drive 1532 may be any drive capable of causing rotation of the rollers 1510R.

The fingers 1540 of the bot 110 extend laterally relative to the longitudinal axis 6000 of the bot. The fingers 1540 are also capable of movement in the direction of arrow 1673 (e.g. in a direction substantially perpendicular to the direction 1550 of extension and retraction of the fingers). The fingers may be driven by any suitable drive for lifting the pickfaces 1700P over the fence 1510F and into/out of the payload bed 1510 of the bot 110. One example, of a drive unit that may drive the fingers 1540 can be found in United States Provisional Patent Application number 61/423,388 entitled "AUTOMATED BOT TRANSFER ARM DRIVE SYSTEM," having Attorney Docket Number 112P014265-US (-#1) and filed on December 15, 2010 (now US Pat. App. No. 13/326,993 with Attorney Docket Number 112P014265-US (PAR) filed on December 15, 2011).

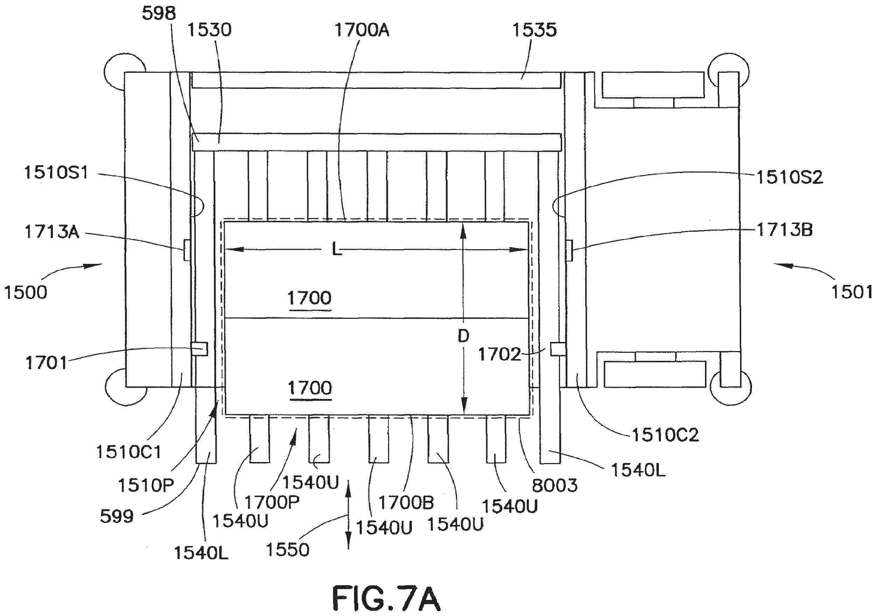

Each finger 1540 may include a mounting member 1671 and an arm portion 1541 having a first end 598 and a second end 599. The mounting member 1671 may be coupled to the first end 598 of the arm portion 1541 while the second end 599 is distally located from the mounting member 1671. Each finger 1540 may be movably coupled, in a cantilevered manner, to the movable member 1535 so that the fingers may be extended and retracted (e.g. via lateral movement of the movable member 1535) in the direction of arrow 1550 relative to the payload bed 1510 for interacting with, for example, the slats of the storage shelves 600 and the slatted shelves 720 (Fig. 7) of the multilevel vertical conveyors 150A, 150B. For example, the mounting member 1671 of each finger 1540 extends from the first end 598 of the finger 1540. It is noted that while the finger 1540 is shown as being constructed of different parts 1541, 1671, the finger 1540 may have a unitary one-piece construction. The movable member 1535 may include guides 1670 where each mounting member 1671 and a respective guide 1670 are configured such that the mounting member 1671 is slidable along the guide 1670 in the direction of arrow 1673 (e.g. along a lift axis that is substantially perpendicular to the direction 1550 of lateral travel of the transfer arm 1540A). The guides 1670 are shown as rails but it is noted that the guides may be any suitable member for allowing a respective finger 1540 to controllably move relative to, for example, the movable member 1535 in the direction of arrow 1673. In this example, all of the fingers 1540 (regardless of whether the fingers are in the raised or lowered positions) move as a unit by single axis drive 1531 with the movable member 1535 when the fingers are laterally extended and retracted in the direction of arrow 1550. However, the movable member 1535 and/or fingers 1540 may be configured to allow each finger 1540 to move laterally in the direction of arrow 1550 independent of other fingers 1540. It is also noted that the movable member 1535 and/or fingers 1540 may be configured to allow groups of fingers to move laterally in the direction of arrow 1550 independent of other groups of fingers.

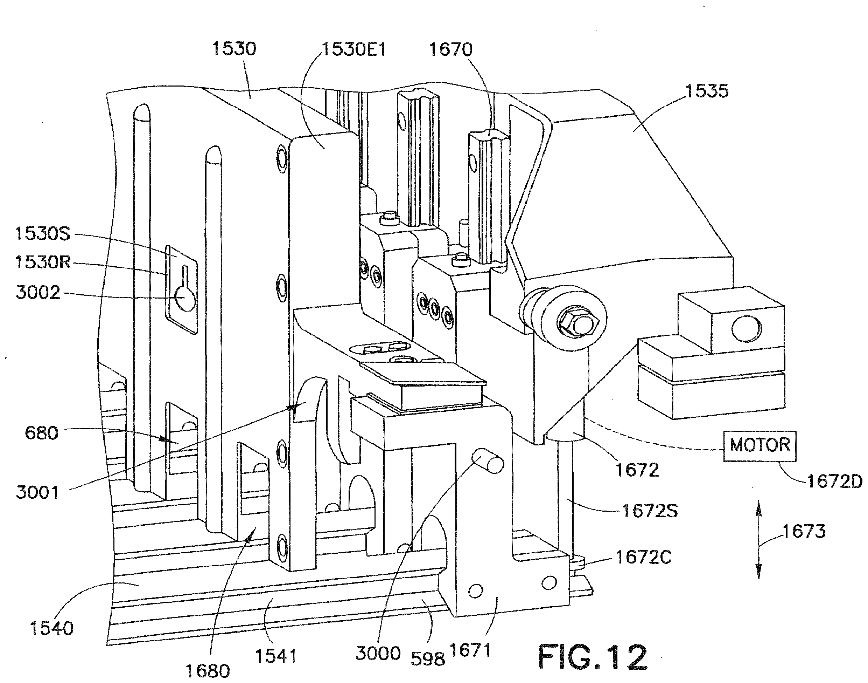

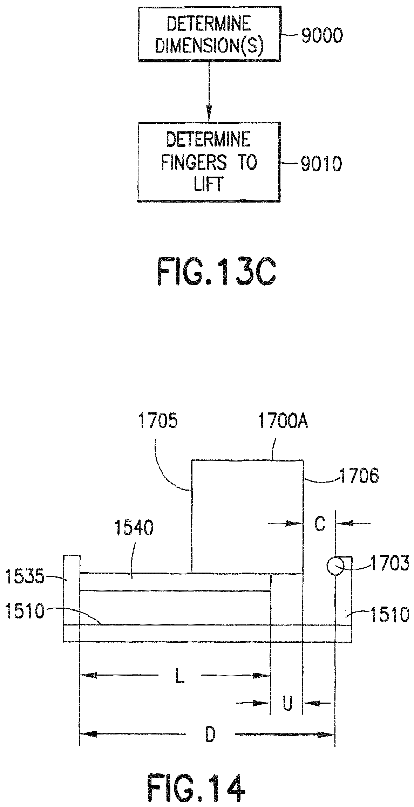

At least one drive unit 1672 may be mounted to the movable member 1535 and coupled to the first end of one or more fingers 1540 in any suitable manner for driving the one or more fingers along the guides 1670 in the direction of arrow 1673 along the lift axis. It is noted that the at least one drive unit 1672 may be coupled to any portion of the one or more fingers 1540 for driving the fingers along guides 1670. Each finger 1540 may have a respective drive unit 1672 so that each finger 1540 can be independently raised and lowered or a single drive unit may drive more than one finger along its respective guide (or e.g. some fingers may individually moveable while others are movable in groups). The drive unit 1672 may be any suitable drive unit capable of driving the finger (s) along the lift axis in the direction of arrow 1673. One example, of a suitable drive unit is described in, for example, United States Provisional Patent Application number 61/423,388 entitled "AUTOMATED BOT TRANSFER ARM DRIVE SYSTEM," having Attorney Docket Number 1127P014265-US(-#1) and filed on December 15, 2010 (now US Pat. App. No. 13/326,993 with Attorney Docket Number 1127P014265-US(PAR) filed on December 15, 2011). For example, the drive may include a stepper motor 1672D (Fig. 12) configured to drive any suitable linear actuator such as, for example, a ball screw 1672S (Fig. 12). The drive unit may also include any suitable motor that allows for tracking the number of revolutions or partial revolutions of the motor. It is noted that the drive unit and guide may be incorporated with each other as a unit such as, for exemplary purposes only, a chain/belt and sprocket/pulley where the chain or belt is arranged to carry the finger in the direction of arrow 1673. Each drive unit 1672 may be selectable by, for example, the bot controller 1220 (or any other suitable controller such as for example control server 120) and independently operable for lifting a respective finger 1540. The drive unit 1672 may be coupled to, for example, the first end 598 (Fig. 7A) of the finger 1540 by any suitable coupling 1672C. Each drive unit 1672 may be selectably coupled to the respective finger 1540 by releasable couplings 1672C (e.g. mechanical, magnetic, etc.) or the drive units 1672 may be substantially permanently coupled to the respective fingers such as through a pivotable, rotatable, or otherwise movable joint or coupling. It is noted that the drive unit and guide may be incorporated with each other as a unit such as, for exemplary purposes only, in the case of a chain/belt and sprocket/pulley where the chain or belt is arranged to carry the finger in the direction of arrow 1673. Each drive unit 1672 may be selectable by, for example, the bot controller 1220 and independently operable for lifting a respective finger 1540. It is noted, however, that any suitable controller, such as for example, the control server 120 may select the drive units to actuate. In one aspect the storage and retrieval system may include case unit and or pickface sensors for determining one or more dimensions of one or more of the case units and pickfaces formed by the case units. For example, the in-feed transfer stations 170 may include any suitable sensors CS (Fig. 1) for determining one or more dimensions of the case units and/or pickfaces (Fig. 13C, Block 9000). The bot 110 may also include any suitable sensors PS (Fig. 5) located, for example, in the payload bed for determining one or more dimensions of the case unit(s) and/or pickface(s) carried by the bot 110. In other aspects any suitable sensors may be disposed in any suitable location of the storage and retrieval system for determining one or more dimensions of the case units and/or pickfaces. The sensors CS, PS may be in communication with one or more of the bot controller and control server 120 where the dimensions of the case unit(s) and/or pickface(s) may be stored in any suitable memory of the bot controller and/or control server 120. As noted above, when the drives 1672 for lifting the fingers 1540 are actuated the bot controller and/or control server 120 may use case/pickface data obtained from one or more of the sensors CS, PS for determining which drives 1672 to actuate (e.g. which fingers to lift) depending on a dimension of the case as determined by the case/pickface data (Fig. 13C, Block 9010). As may be realized, data from a position of the case unit(s)/pickface(s) in the payload bed, e.g. as determined by the sensors PS, of the bot may also be used in determining which drives 1672/fingers 1540 to actuate/lift. Each drive unit 1672 may be selectably coupled to the respective finger 1540 by releasable couplings 1672C (e.g. mechanical, magnetic, etc.) or the drive units 1672 may be substantially permanently coupled to the respective fingers such as through a pivotable or otherwise movable joint or coupling.

Each drive unit 1672 may be suitably connected to, for example, the bot controller 1220 or any other suitable controller (such as for exemplary purposes only the control server 120) for causing lifting movement of the fingers 1540 as described herein. The bot controller 1220 may be configured to selectively actuate each of the drive units 1672 for lifting and lowering any desired number of fingers 1540 in unison. For example, a size of a pickface to be picked by the bot 110 can be determined in any suitable manner, such as through sensors located on the bot or any suitable table or other information stored in a memory of the bot controller 1220, control server 120, warehouse management system 2500 or any other suitable memory. Depending on the size of the pickface, a suitable number of fingers 1540 may be selected for actuation so that the pickface is substantially uniformly supported by the fingers 1540 of the transfer arm 1540A. The controller 1220 may be configured to send start and stop commands to the motors 1672D (Fig. 12) for the selected fingers 1540 to drive the motors 1672D through the same angle of rotation causing the selected fingers 1540 to be lifted (or lowered) in unison so that the selected fingers 1540 are substantially at the same height and start/stop movement substantially at the same time. It is noted that the motors 1672D may be ganged to the controller 1220 so that the controller 1220 can select which motors 1672D are to be commanded, e.g. placed in an operational state or an idle state (Fig. 9, Block 18000). As may be realized, the ganged connection between the motors 1672D and the controller 1220 allows for operation of the selected motors with but one command signal for starting and stopping the selected motors (Fig. 9, Block 18010). Operation of the motors 1672D with but one start/stop command signal allows the selected motors to start and stop substantially at the same time and hence, generate substantially the same rotation. It is noted that any suitable sensors on the fingers (as will be described below) may provide positional data but this positional data may not be needed for a closed loop position feedback system such as formed by the ganged motors 1672D (e.g. stepper motor feedback) and the controller. In one aspect the finger sensors (described below) may be used to confirm the position of the fingers as determined by the closed loop feedback system. In other aspects the finger sensors may be an open loop system may be used in lieu of or in addition to the closed loop feedback system.

A case unit contact member 1530 may be movably located at least partially within the payload area where the case unit contact member is releasably coupled to the movable member 1535 for causing the extension and retraction of the transfer arm 1540A in the direction of arrow 1550 in the manner described in, for example, United States Provisional Patent Application number 61/423,365 entitled "AUTOMATED BOT WITH TRANSFER ARM," having Attorney Docket Number 1127P014264-US (-#1) (now US Pat. App. No. 13/326,952 with Attorney Docket Number 1127P014264-US (PAR) filed on December 15, 2011). It is noted that the case unit contact member 1530 may include any suitable slots 1680 that allow each finger to be lifted in the direction of arrow 1673 without substantially contacting the case unit contact member 1530. In this example, the case unit contact member has a slot 1680 for each finger 1540 but it should be understood that the slots 1680 may have any suitable configuration such as for example, a configuration that allocates one slot to more than one finger 1540. The case unit contact member 1530 may be driven laterally in the direction of arrow 1550 by any suitable drive 1531. For exemplary purposes only, the drive 1531 may be a belt and pulley drive 1534 (Fig. 9) but it should be understood that the drive may be any suitable drive for causing movement of the case unit contact member in the direction of arrow 1550. Both of the case unit contact member 1530 and the movable member 1535 (along with the fingers 1540) are configured to move laterally in the direction of arrow 1550. The case unit contact member 1530 may be configured to move along rails 1530R1, 1530R2. The rails 1530R1, 1530R2 may be mounted to the frame 110F in any suitable manner for guiding the movement of the case unit contact member 1530 and the movable member 1535. It should be understood that the movement of the case unit contact member 1530 and the movable member 1535 in the direction of arrow 1550 may be guided in any suitable manner such as by separate rail systems (e.g. each of the case unit contact member 1530 and the movable member 1535 have their own distinct rails). For exemplary purposes only, referring to Figs. 5 and 7, each of the case unit contact member 1530 and the movable member 1535 may have respective slide members 1530D1, 1530D2, 1535D1, 1535D2 for movably coupling the case unit contact member 1530 and the movable member 1535 to the rails 1530R1, 1530R2. The one or more of the slide members 1530D1, 1530D2, 1535D1, 1535D2 may be distributed or suitably sized to extend along the rails for supporting a pickface that is supported on the cantilevered fingers 1540 of the transfer arm 1540A. The case unit contact member 1530 may be independently movable in the direction of arrow 1550 for engaging or otherwise orienting case units disposed on the payload bed 1510 as described in, for example, United States Provisional Patent Application number 61/423,220 entitled "BOT PAYLOAD ALIGNMENT AND SENSING," having Attorney Docket Number 1127P014263-US (-#1) (now US Pat. App. No. 13/327,040 with Attorney Docket Number 1127P014263-US (PAR) filed on December 15, 2011).

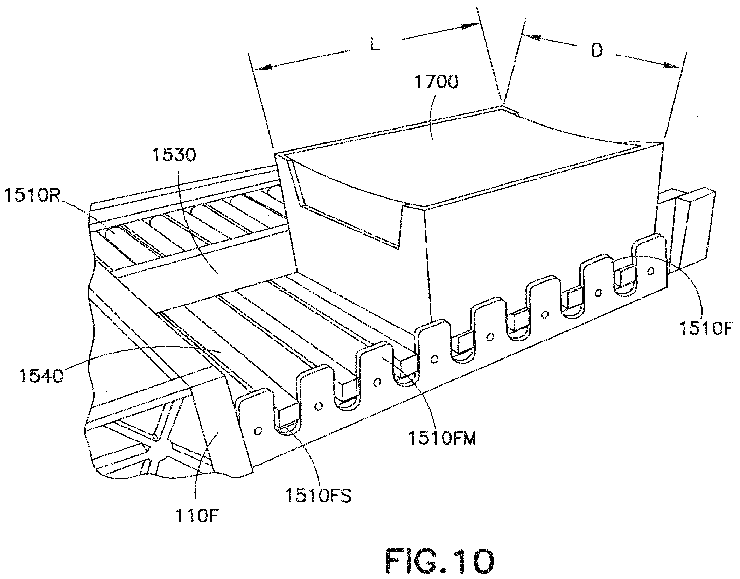

Referring to Figs. 6 and 10 the case unit contact member 1530 may be configured to allow the fingers to move in the direction of arrow 1673 (e.g. perpendicular to the plane of extension and retraction of the case contact member 1530 and fingers 1540 in the direction of arrow 1550) as will be described in greater detail below. For example, the case unit contact member 1530 may include any suitable slots 1680 that allow each finger to be lifted in the direction of arrow 1673 without substantially contacting the case unit contact member 1530. In this example, the case unit contact member has a slot 1680 for each finger 1540 but it should be understood that the slots 1680 may have any suitable configuration such as for example, a configuration that allocated one slot to more than one finger 1540. As described above, the fence 1510F includes slots 1510FS that allow the fingers 1540 to pass through the fence 1510 in a substantially lowered position as well as in a raised position when transferring case units to and from the payload bed 1510.

In other aspects, referring to Fig. 7C, the bot 110 may include one or more side blades 1535G mounted to the bot arm 110A. One or more of the blades 1535G may be moved along the longitudinal axis 6000 of the bot 110 in the direction of arrow 1550X for aligning the pickface (e.g. one or more case units 1700A) on the bot arm 110A. The translational movement of the one or more side blades 1535G may allow for the positioning of the bot payload anywhere along the longitudinal axis of the bot within the bot payload area and may provide fine adjustment for case positioning onto the storage shelves 600. It is noted that in this aspect the side blades 1535G may not carry, transport or lift the case units 1700A but may aid in case unit 1700A control during picking and placing the case units. It is noted that one side blade 1535G may be fixed and act as a datum for aligning the case units 1700A.

Referring again to Figs. 1, 6, 7A and 7B the bot 110 may also include any suitable sensor(s) 1703 for detecting the pickface 1700P (and case units 1700 that make up the pickface) as they are transferred to and from the payload bed 1510. The sensor 1703 may be a through-beam sensor. The sensor 1703 may include a transmitter 1701 and receiver 1702 that are, for example, mounted to the frame (in any suitable manner) adjacent a side opening 1510P of the payload bed 1510. The sensor 1703 may be configured and positioned on the bot 110 to sense the edges of the pickface 1700P when the pickface 1700P is transferred between, for example, a storage shelf 600 or multilevel vertical conveyors 150A, 150B and the payload bed 1510. The sensor 1703 may be configured to sense the leading and trailing edges 1700A, 1700B of the pickface 1700P as the pickface 1700P passes by the sensor 1703 to determine, for example, the depth D of the pickface 1700P. It should be understood that the sensor may be configured to sense any suitable feature of the pickface 1700P (e.g. the pickface as a unit and/or each individual case unit of the pickface) for determining, for example, any suitable dimensions of the pickface 1700P. The bot controller 1220 (or any other suitable controller such as for example the control server 120) may be configured to register a detection signal(s) from the sensor 1703 during transfer of the case unit(s) to and/or from the bot 110. The controller 1220 may be configured to respond to the detection of the leading edge 1700A and trailing edge 1700B of the pickface 1700P for determining the depth D of the pickface 1700P. As may be realized, which edge of the pickface is the leading edge depends on which direction the pickface 1700P is travelling. For example, as the pickface 1700P enters the payload area the edge closest to the case unit contact member 1530 is the leading edge and as the pickface 1700P leaves the payload area the edge closest to the case unit contact member 1530 is the trailing edge of the pickface 1700P. For exemplary purposes only, the controller 1220 may be configured to use the leading and trailing edge sensor signals along with any other suitable information/data (such as for example indexing of a drive that drives the movement of fingers 1540 as they are extended and retracted from/to the payload bed area) for determining the pickface depth

The sensor 1703 may also be configured to sense if the pickface 1700P extends beyond the opening 1510P of the payload bed 1510. If the pickface does extend beyond the opening of the payload bed 1510 the controller 1220 may be configured to cause the bot 110 to time out (e.g. halt operation) so that corrective action can be taken if such an "overhanging" of the payload is detected. Such corrective action may include but is not limited to returning the payload to the storage shelf 600 from which the case was picked or if the case was picked from a multilevel vertical conveyor to a storage shelf in a location where the case units/pickfaces can be inspected and redirected to an appropriate location within the storage and retrieval system. Such corrective action may also include the bot effecting the stopping of the multilevel vertical conveyor either through communication between the bot and the multilevel vertical conveyor or through communication with, for example, the control server 120 (or any other suitable controller that communicates with both the bots and the multilevel vertical conveyor). As may be realized, the bot may include other suitable sensors to determine what amount the pickface 1700P extends beyond the opening 1510P of the payload bed 1510 where the controller 1220 only allows the bot 110 to be redirected to, for example, an inspection area if the overhang of the pickface is less than a predetermined overhang amount. The predetermined overhang amount may be any suitable overhang distance such that the overhanging pickface will not contact the structure of the storage and retrieval system, other bots or other pickfaces during redirection to, for example, the inspection area. As may also be realized, the sensor 1703 can also be used to detect and measure any gaps between the cases of the pickface.

The bot 110 may also have any suitable sensors for detecting the length L (Fig. 7) of the pickface 1700P. For example, the bot 110 may include sensors 1713A, 1713B each disposed at opposite longitudinal ends of the payload bed 1510. For exemplary purposes only, the sensors 1713 may be contact plates, through beam sensors, load cells or any other suitable sensors that detect, for example, substantial contact between the case unit and the side of the payload bed 1510. The bot controller 1220 may also be configured to monitor strain (e.g. an increase in current, etc.) on the drive 1532 for detecting substantial contact between the case unit 1700 and the side 151S1, 151S2. It should be understood that while the sensors 1713 are shown in the figures as being located adjacent the sides 1510S1, 1510S2, the sensors 1713 may be located in any suitable location of the bot 110 for sensing the substantial contact between the case unit and the sides 1510S1, 1510S2.

When the pickface 1700P is disposed on, for example, the rollers 1510R of the payload bed 1510, the rollers may be driven in a first direction 1551 until the pickface 1700P is sensed by a first one of the sensors 1713A, 1713B (e.g. the pickface substantially contacts a side 1510S1, 1510S2 of the payload bed 1510). A first detection signal may be sent to, for example, the bot controller 1220 indicating the pickface is disposed at a first side of the payload bed 1510. Where the pickface includes more than one case unit the rollers may continue to be driven a predetermined amount of time after a first case unit of the pickface 1700P is sensed by the sensor 1713A, 1713B so that the remaining case units 1700 of the pickface 1700P also substantially contact the side 1510S1, 1510S2 of the payload bed 1510. The rollers may then be driven in the opposite direction 1551 so that the pickface is driven towards and is sensed by the other sensor 1713A, 1713B (e.g. substantially contacts the other side 1510S1, 1510S2) disposed on the opposite side of the payload bed 1510. A second detection signal may be sent to, for example, the bot controller 1220 indicating the pickface is disposed at a second side of the payload bed 1510. Again where the pickface 1700P includes more than one case unit the roller may continue to be driven a predetermined amount of time after a first one of the case units is sensed by the sensor 1713A, 1713B to allow the other case units of the pickface to substantially contact the side 1510Sa, 1510S2. The bot controller 1220 may be configured to determine the length L of the pickface using the first and second detection signals from the sensors 1713A, 1713B in combination with, for example, data regarding the operation of the bed drive or motor 1532. It should be understood that the length L of the pickface 1700P may be determined in any suitable manner using any suitable sensors by any suitable processor or controller. In one example, the bot 110 may be configured to send pickface measurement data to, for example, control server 120 for determining the measurements of the pickface.

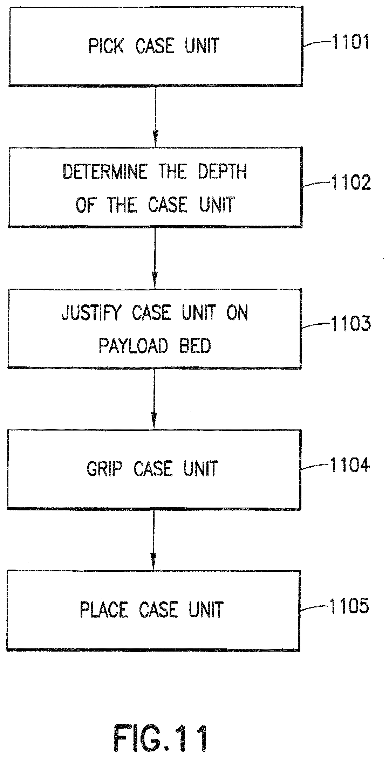

Referring to Figs. 1, 5, 6, 7A, 7B, 8, 10 and 11 an exemplary operation of the bot 110 will be described. The bot 110 may be instructed by, for example the control server 120 to pick a pickface 1700P from a multilevel vertical conveyor 150A or a storage shelf 600. The bot 110 extends the fingers 1540 through the slots 1510FS in the fence 1510F and underneath the case unit to be picked. The pickface is lifted by the fingers 1540 and carried into the payload bed area. As may be realized the fingers 1540 may be raised so that when the case unit(s) are transferred into and out of the payload area of the frame 110F, the case unit(s) are carried over the stopping members 1510FM of the fence substantially without contacting the stopping members 1510FM. As the fingers are retracted into the payload bed area the controller 1220 determines the depth D of the pickface 1700P as described above (Fig. 11, Block 1102). For example, as the pickface 1700P is carried into the payload area of the bot 110 the sensor 1703 senses a first or leading edge 1700A as well as the second or trailing edge 1700B of the pickface 1700P as well as any gaps between, for example, the cases that form the pickface where the pickface includes multiple cases. As described above, the controller 1220 detects the signals from the sensor 1703 corresponding to the sensing of the first and second edges 1700A, 1700B and along with other suitable information (such as for example, data regarding the operation of the finger extension/retraction drive motor) determines the depth D of the pickface 1700P being transferred into the payload area.

The bot controller 1220 and/or the control server 120 may be programmed with an expected depth of the pickface 1700P being picked by the bot. The bot controller 1220 may communicate with the control server 120 and inform the control server of the pickface depth D. If the determined pickface depth D matches the expected pickface depth then a confirmation may be sent by the control server 120 to the bot controller 1220 that the correct pickface 1700P has been picked and commands the bot 110 to proceed with transportation of the pickface 1700P. If the determined pickface depth D does not match the expected pickface depth then the control server 120 commands the bot 110 to return the pickface 1700P to the storage shelf 600 from which the pickface 1700P was obtained or commands the bot 110 to redirect the pickface 1700P to an area of the storage and retrieval system where the pickface 1700P can be, for example, inspected. If the determined pickface depth D does not match the expected pickface depth the bot 110 may be configured to verify its location within the storage and retrieval system 100 and/or re-measure the depth D of the case unit. If the pickface depth D is determined to be incorrect after bot location verification and/or pickface depth re-measurement a fault signal may be sent to, for example, the control server 120 and the bot may return the pickface 1700P back to the storage shelf 600 from which the pickface 1700P was obtained or redirect the pickface 1700P to any other suitable location within the storage and retrieval system. The bot 110 may then proceed to, for example, another storage location, multilevel vertical conveyor, etc. for picking another case unit.

If the pickface 1700P is verified as being the correct case unit, the bot 110 may be configured to justify the pickface 1700P to a predetermined position on the payload bed 1510 when the case unit is transferred into the payload area of the frame 110F (Fig. 11, Block 1103). For example, after the fingers are retracted and the case unit is positioned over the payload bed 1510 the fingers 1540 may be lowered so that the pickface 1700P is supported by, for example, the rollers 1510R (or any other suitable supports) of the payload bed 1510. The bot 110 may drive the rollers 1510R, as described above for determining the length L of the pickface, such that the pickface 1700P is located in substantial contact with a side 1510S1, 1510S2 of the payload bed 1510. When the pickface 1700P is in substantial contact with a side 1510S1, 1510S2, the bot controller 1220 may detect a signal from one of the sensors 1713A, 1713B and instruct the drive 1532 to stop driving the rollers 1510R after a predetermined time period as described above so that all case units 1700 of the pickface are in substantial contact with the side 1510S1, 1510S2. As may be realized movement of the pickface in the direction of arrow 1551 (e.g. in the direction of the longitudinal axis 6000 of the bot 110) registers a position of or locates pickface 1700P relative to the bot 110 along one axis (e.g. the longitudinal axis of the bot).

The bot 110 may also be configured to register the pickface 1700P along a second axis (e.g. the lateral axis of the bot) so that the lateral and longitudinal position of the pickface 1700P relative to the bot 110 is known. For example, a second datum reference may be formed by, for example, the fence 1510F. It is noted that the second reference datum, as well as the first reference datum, may be formed by any suitable features of the payload bed 1510. The case unit contact member 1530 may be operated through any suitable drive, such as drive 1531, to move the case unit contact member 1530 towards the side opening 1510P of the payload bed 1510 for contacting and pushing the pickface 1700P substantially against the fence 1510F for locating the pickface 1700P laterally relative to the bot 110. The bot may have any suitable sensors 1714, which may be substantially similar to sensors 1713, for detecting the substantial contact between the pickface and the fence 1510F. It is noted that the bot controller 1220 may be configured to monitor strain (e.g. an increase in current, etc.) on the drive 1531 for detecting substantial contact between the pickface 1700P and the fence 1510F. As may be realized the sensors 1714 may be positioned at any suitable location relative to the payload bed 1510 for detecting the substantial contact between the pickface 1700P and the fence 1510F. As may also be realized, both drives 1531, 1532 may operate substantially simultaneously or independently of each other for moving the pickface in the directions of arrows 1550, 1551 for substantially contacting the first and second references datums (e.g. one of the sides 1510S1, 1510S2 and the fence 1510F) . In this manner, as the pickface is in substantial contact with first and second reference datums (which may be substantially perpendicular to each other) the pickface 1700P is repeatably positioned at a predetermined location on the payload bed 1510.

The case unit contact member 1530 may remain in substantial contact with the pickface 1700P and work in conjunction with the fence 1510F (as shown in e.g. Fig. 10) for actively gripping the pickface 1700P between the case unit contact member 1530 and fence 1510F during transport of the pickface on the bot 110 (Fig. 11, Block 1104). To grip the pickface 1700P the bot 110 may move the case unit contact member a distance dependent on the depth D of the pickface 1700P so that the case unit contact member effects gripping of the pickface between the case unit contact member and the fence. In this manner gripping the pickface 1700P allows the position of the pickface 1700P relative to the bot 110 to be substantially maintained during transport of the pickface 1700P as well as prevent the pickface from escaping or falling off of the payload bed 1510 during transport. It is noted that the pickface may be actively gripped by the bot 110 during transport of the pickface in any suitable manner.

The bot 110 may be instructed by the control server 120 to transport the pickface 1700P located on the payload bed 1510 to a predetermined location (e.g. destination) within the storage and retrieval system 100. At the predetermined destination the case unit contact member 1530 may be moved to release the grip on the pickface 1700P. The bot controller 1220 may cause the drive 1532 to move the rollers 1510R so that the pickface 1700P is moved in the direction of arrow 1551 a predetermined distance away from the first reference datum (e.g. one of sides 1510S1, 1510S2) so the pickface 1700P can be lifted off of the payload bed 1510 and transferred off of the bot without substantial contact with the sides of the payload bed 1510 (e.g. unimpaired travel of the pickface 1700P from the payload bed). The bot controller 1220 may be configured to receive signals from, for example, sensors 1713 or obtain any other suitable information (such as from encoders on the drive 1532) for determining a distance between the pickface 1700P and the side 1510S1, 1510S2. When the determined distance is substantially equal to, for example, a predetermined distance (e.g. stored in a memory of the bot or control server 120) the bot controller 1220 may cause the drive 1532 to stop movement of the pickface 1700P. The bot 110 may also cause the case unit contact member to push the pickface 1700P against the fence 1510F after the pickface 1700P is moved away from the side 1510S1, 1510S2 so that the pickface 1700P is re-justified against the fence and all case units in the pickface are in substantial contact with one another. The rejustification and compacting (e.g. moving the case units together) of the pickface may be monitored in any suitable manner such as with any suitable sensors (such as those described above) and/or monitoring a condition of one or more of the bot drive motors such as the motors 1531, 1532. As the distance between the pickface 1700P and side 1510S1, 1510S2 is tracked by the controller 1220 and the pickface 1700P is re-justified against the fence 1510F the relative position between the pickface 1700P and the bot may be maintained as having a known relationship allowing the bot to place the pickface 1700P on, for example, a storage shelf 600 in a predetermined location. The predetermined location of the pickface and each of the case units therein may be stored in any suitable location such as, for example, in a memory of control server 120 for use when picking pickfaces from their respective locations on the storage shelves.

The bot controller 1220 causes the fingers 1540 to lift the pickface 1700P off of the rollers 1510R and above the stopping members 1510FM of the fence 1510F and extend laterally away from the bot 110 for placing the pickface 1700P at a desired location. When the pickface 1700P is located above its destination location, on for example, the storage shelf 600, the fingers 1540 are lowered between the stopping members 1510FM of the fence (e.g. into the slots 1510FS) and the pickface 1700P is transferred onto, for example, the support surface 620H1, 620H2 of the slatted storage shelf 600 for placing the pickface 1700P on the shelf 600 (Fig. 11, Block 1105).

Referring to Figs. 7A, 12, 13A and 13B, the case unit contact member 1530 may be releasably coupled to the movable member 1535 in any suitable manner for engaging the movable member 1535. Engagement of the case unit contact member 1530 with the movable member 1535 allows the case unit contact member 1530 and the movable member 1535 (and hence the arm/fingers of the bot) to be driven by a single axis drive and move as a unit in the direction of arrow 1550 for extending and retracting the fingers 1540 with the driven movement of the case unit contact member 1530. The releasable coupling between the movable member 1535 and the case unit contact member 1530 may be passively effected through the lifting and lowering of at least one of the fingers 1540 where the coupling is engaged when at least one of the fingers 1540 is lifted and the coupling is disengaged when the fingers 1540 are in their substantially lowered positions. It is noted that when the fingers are lowered (e.g. the coupling is disengaged) the case unit contact member 1530 is movable independent of the movable member 1535 to for example, justify pickfaces on the payload bed or to grip the pickface as described in, for example, United States Provisional Patent Application number 61/423,220 entitled "BOT PAYLOAD ALIGNMENT AND SENSING," having Attorney Docket Number 1127P014263-US (-#1) (now US Pat. App. No. 13/327,040 with Attorney Docket Number 1127P014263-US (PAR) filed on December 15, 2011).

Each mounting member 1671 may include any suitable protrusion which, when the mounting member 1671 is lifted to raise the respective finger, engages a complimentary recess of the case unit contact member 1530. As described above, because the mounting members 1671 are mounted to and slidable relative to the movable member 1535 only in the direction of arrow 1673 (e.g. substantially perpendicular to the direction of travel 1550 of the case unit contact member 1530) engagement of the protrusion within the recess causes the movable member 1535 to be selectively coupled to the case unit contact member 1530 so that when the case unit contact member is driven by drive 1531 (Fig. 9) the movable member 1535 is also driven to extend and retract the fingers 1540.

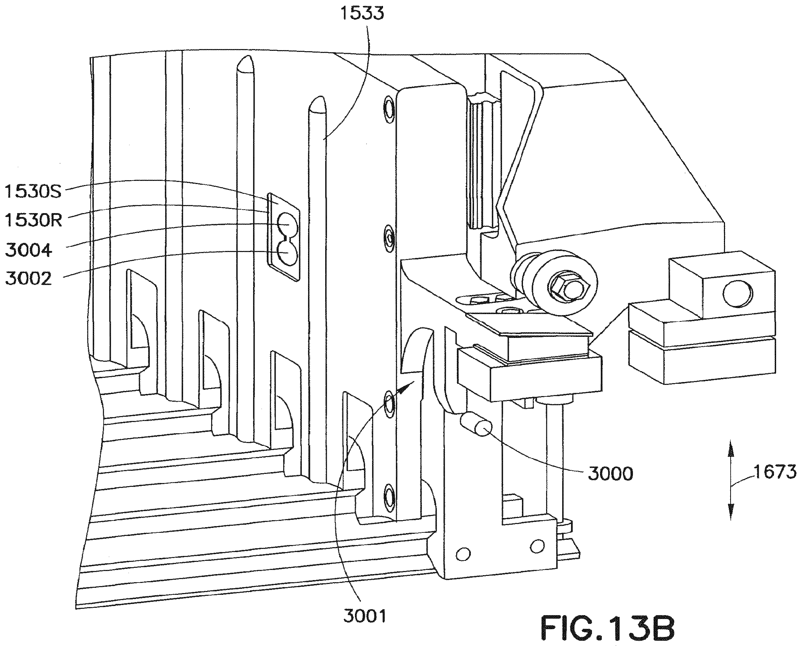

The protrusion and recess may be in the form of a key 3004 and keyhole 3002 as shown in Fig. 13B. However, it should be understood that the protrusion and recess may have any suitable configuration. Here the key 3004 may extend from a side of one or more of the mounting members 1671 facing the case unit contact member 1530 so that when the case unit contact member 1530 is in a retracted position (e.g. closest to the movable member 1535) the key(s) 3004 extends through a respective key hole 3002 in the case unit contact member 1530. As one or more mounting members 1671 (e.g. finger 1540) is lifted the key 3004 of the one or more mounting members 1671 moves into a slot of the respective keyhole 3002 so that a portion of the key 3004 overhangs the keyhole slot to substantially engage a surface 1530S of the case unit contact member 1530. In one example, the keyhole and key may be positioned within a recess 1530R of the case unit contact member 1530 so as not to interfere with any pickfaces that may be in substantial contact with the case unit contact member 1530. It is noted that the case unit contact member 1530 may include raised portions or ribs 1533 that extend from a face of the case unit contact member 1530 for substantially preventing interference between the keyhole and key and any pickfaces located on the fingers 1540 or payload bed 1510.

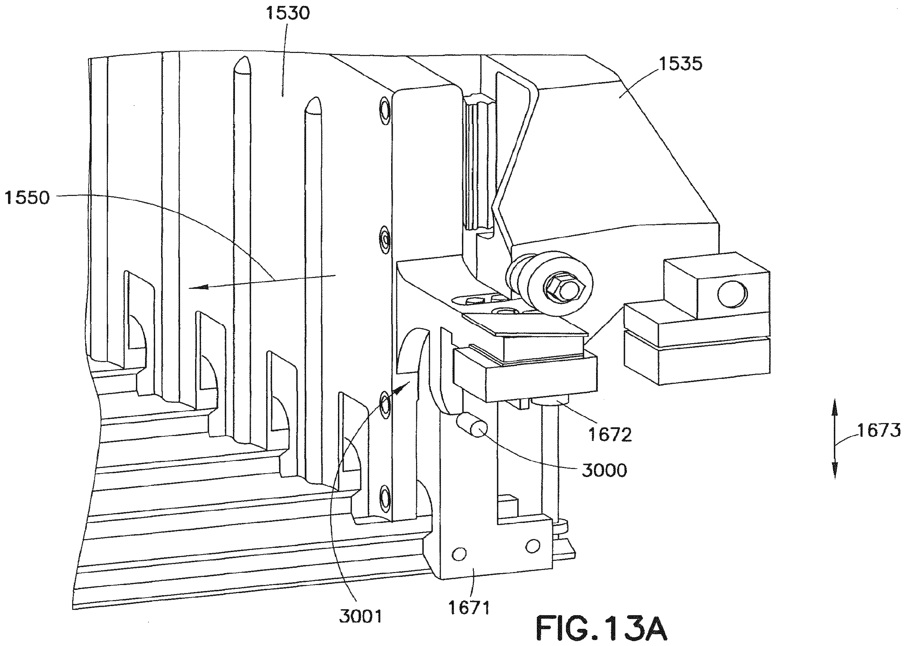

The protrusion may be in the form of one or more pins 3000 that extend from the mounting member 1671 and the recess may be in the form of one or more slots 3001 located in the case unit contact member 1530. The one or more slots 3001 may be disposed adjacent one or more of the mounting members 1671 when the case unit contact member 1530 is in a substantially retracted position as shown in Figs. 13A and 13B. When the case unit contact member 1530 is in the retracted position the slot 3001 is substantially aligned with the pin 3000 in the direction 1673 so that when the mounting member 1671 (e.g. finger 1540) is lifted by a respective one of the drives 1672 the pin 3000 is moved into and engages the slot 3001. At least one slot 3001 is located adjacent the ends 1530E1, 1530E2 of the case unit contact member 1530 such that only the mounting members 1671 of the outermost fingers 1540 are capable of engaging the slots 3001 for coupling the movable member 1535 to the case unit contact member 1530. Here the pickface may be positioned on the payload bed 1510 (Fig. 5) so that the pickface is aligned with at least one of the outermost fingers 1540 during transfer of the pickface to and from the bot 110. It is noted that there may be slots disposed along the length of the case unit contact member so that any one of the mounting members 1671 can effect coupling of the movable member 1535 to the case unit contact member 1530 when a respective finger 1540 is raised.

As may be realized, the pin 3000 and slot 3001 engagement may be used separately from or in conjunction with the key 3004 and keyhole 3002 engagement in any suitable manner. For example, the mounting members 1671 of outermost fingers 1540 may be configured with pins 3000 to engage the recesses 3001 located adjacent the ends 1530E1, 1530E2 of the case unit contact member 1530 while the mounting members 1671 of inner fingers (located between the outermost fingers) are configured with keys 3004 for engaging keyholes 3002 located between the ends 1530E1, 1530E2 of the case unit contact member 1530. It is noted that the engagement between the case unit contact member 1530 and the movable member 1535 may be accomplished in any suitable manner. As may also be realized, the releasable coupling between the movable member 1535 (e.g. the bot transfer arm) and the case unit contact member 1530 may be effected by lifting any suitable number of the fingers 1540. For example, the coupling may be effected by lifting one of the outermost fingers, both of the outermost fingers, one of the inner fingers, more than one inner finger or any suitable combination of inner and outer fingers. Further, the slots 3001 and keyholes 3002 may be configured to allow coupling of the movable member 1535 and the case unit contact member 1530 through only a partial lifting of one or more of the fingers 1540. For example, coupling engagement of the slots and keyholes with their respective pins and keys may occur when the fingers are raised to a position for insertion into the storage shelf 600 beneath a pickface. The slots and keyholes may further be configured to allow further lifting of the fingers 1540 (e.g. the keys and pins are slidable within an engagement portion of the respective keyhole and slot) so that the pickface can be lifted off of the storage shelf 600 and transferred to the payload bed 1510 of the bot 110.

Referring now to Figs. 4A and 9 an exemplary operation of the bot 110 will be described. The bot controller 1220 may direct the bot to a predetermined pickface location at, for example, a storage rack 600 (or multilevel vertical conveyor). The pickface location may include a pickface 1700P where each case unit 1700A, 1700B of the pickface 1700P is located on the storage rack 600 so that the a position of the front and back edges 1705, 1706 of case unit 1700A are known and the front and back edges 1707, 1708 of case unit 1700B are known by, for example, the bot controller 1220 and/or the control server 120. While pickface 1700P is shown as having two case units 1700A, 1700B it is noted that the pickface may include any suitable number of case units. The bot controller 1220 may cause one or more fingers 1540 to raise a predetermined distance (e.g. only partially raised to allow insertion of the fingers into the storage shelf 600 beneath the pickface 1700P) so that the movable member 1535 is coupled to the case unit contact member 1530. The one or more fingers 1540 may be extended into the slats of the storage shelf beneath the case unit(s) to be picked. The bot controller 1220 or any other suitable controller may be configured to determine the amount of arm extension so that the cantilevered tips of the raised fingers 1540 "underpick" the furthest case unit (from the bot along an axis of extension of the fingers 1540) to be transferred to the bot 110. For example, if the bot 110 is instructed to pick case 1700A only, the fingers 1540 may be extended into the storage rack so that the tip of the cantilevered fingers 1540 are located a predetermined distance U (e.g. the underpick) away from the back edge 1706 of the case unit 1700A. If the bot 110 is instructed to pick cases 1700A and 1700B, the fingers 1540 may be extended into the storage rack so that the tip of the cantilevered fingers 1540 are located a predetermined distance U away from the back edge 1708 of the case unit 1700B. The underpick U allows one or more cases to be picked without disturbing the next case in the pickface. For example, case unit 1700A can be picked without disturbing case unit 1700B. Once underneath the case unit(s) to be picked (which for exemplary purposes only is case unit 1700A) the fingers are raised to pick the case unit 1700A off of the shelf and the fingers are retracted in the direction of arrow 1550 so that the case unit 1700B is transferred to the bot payload area in a manner substantially similar to that described in, for example, United States Provisional Patent Application number 61/423,220 entitled "BOT PAYLOAD ALIGNMENT AND SENSING," having Attorney Docket Number 1127P014263-US (-#1) (now US Pat. App. No. 13/327,040 with Attorney Docket Number 1127P014263-US (PAR) filed on December 15, 2011).

When the case unit(s) 1700A are transferred onto the payload bed 1510 of the bot 110, clearance C is needed between the edge 1706 of the case unit 1700A and the fence 1510F so that the case unit 1700A does not hit the fence 1510F or trip a case overhang sensor 1703 as the case unit is lowered onto the payload bed 1510. The amount of clearance C may be determined by subtracting both the underpick distance U and the finger length L from the depth D of the payload bed 1510 (e.g. C=D-L-U). In one example the underpick distance U may be a predetermined distance such as about 9 mm or any other suitable distance and the depth D of the payload bed 1510 may be a constant value. As such, to increase the amount of clearance C between the edge 1706 of the case unit 1700A and the fence 1510F the length L of the fingers 1540 has to decrease. Alternatively, if the clearance C is a predetermined distance and the depth D of the payload bed 1510 remains constant, the finger length L has to decrease to increase the underpick distance U (e.g. U=D-L-C). As may be realized, the underpick U and clearance C may be adjusted without changing the finger length L, but the underpick U and clearance C may not be changed independently without changing the arm length L.

Referring to Figs. 4B, 4C, 5, 7A, 12, 15A, 15B and 16, as noted above, the case unit contact member 1530 may be movably located at least partially within the payload area where the case unit contact member is releasably coupled to the movable member 1535 for causing the extension and retraction of the transfer arm 1540A in the direction of arrow 1550 in the manner described in, for example, United States Provisional Patent Application number 61/423,365 entitled "AUTOMATED BOT WITH TRANSFER ARM," having Attorney Docket Number 1127P014264-US (-#1) (now US Pat. App. No. 13/326,952 with Attorney Docket Number 1127P014264-US (PAR) filed on December 15, 2011). In operation, as the bot 110 is picking or placing pickfaces to the multilevel vertical conveyors 150A, 150B the only items (which in this example is pickface 8003) on the shelf 720 of the conveyor may be those that are picked or placed by the bot 110. On the other hand, when a bot 110 is picking or placing a pickface 8003 to a storage shelf 600, other pickfaces 8001, 8002 may be located adjacent the location 8000 to which the bot is picking from or placing to. As may be realized, the controller 1220 of the bot 110 may be configured to treat the transfer of items from/to the conveyors 150A, 150B different from the transfer of items from/to the storage shelf 600. For example, when transferring pickfaces from/to the conveyors 150A, 150B the bot may cause all of the fingers 1540 of the bot to be lifted above, for example, the fence stop members 1510FM for transferring a pickface. As the only item on the conveyor shelf 720 is the pickface 8003 transferred to/from the bot 110 the lifting and extension of all of the fingers 1540 will not interfere with any other items on the conveyors 150A, 150B. Lifting and extension of all the fingers 1540 would also substantially ensure the distributed support of the pickface 8003 being picked from an inbound conveyor 150A by the fingers 1540 where the position of the pickface on the conveyor shelf 720 may not be known. When transferring pickfaces from/to the storage shelf 600 at, for example, pickface location 8000 lifting of all of the fingers 1540 for extension into the storage shelf 600 may result in contact with pickfaces 8001, 8002 adjacent the location 8000. As may be realized, only the fingers 1540U (Fig. 7A) that are supporting the pickface 8003 (pickface 1700P in Fig. 7A) to be transferred to the shelf 600 may be lifted while the remaining fingers 1540L remain in a substantially lowered position so that as the pickface 8003 is transferred to pickface location 8000 the fingers 1540L not supporting the pickface 8003 are inserted into the shelf 600 beneath (and do not contact) the pickfaces 8001, 8002. It is noted that the storage shelves and/or conveyor shelves may be configured such that the extension of the transfer arm 1540A may be treated the same for the transfer of case units between the bot and both of the storage shelves and the multilevel vertical conveyors.

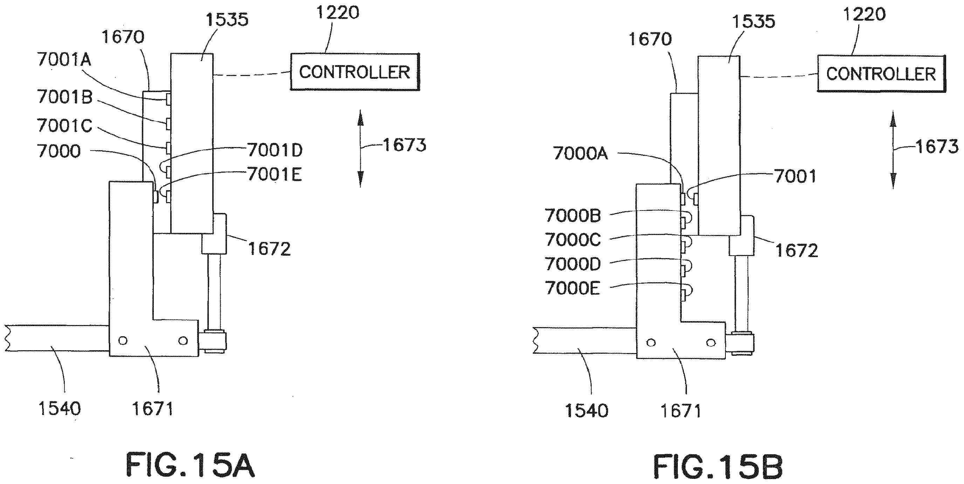

The lift position or height of each of the fingers 1540 can be determined in any suitable manner. Referring to Fig. 15A, a lift position sensor may be positioned along side the lift axis of one or more fingers 1540 for determining/tracking a position of the one or more fingers 1540. The lift position sensor may include a registration device 7000 and one or more detection devices 7001A-7001E. In one example, the registration device 7000 may be mounted to the mounting member 1671 and one or more detecting devices 7001A-7001E may be mounted to movable member 1535. The registration device and detecting devices may be beam (or optical) sensors, capacitive or inductive sensors, or any other suitable type of sensor that will allow for detection of the movement of the mounting member 1671 relative to, for example the movable member 1535. For exemplary purposes only, the registration device 7000 may be a reflective flag in the case of an optical sensor and magnetic/electrical members in the case of capacitance or inductance sensors. It is noted that the registration devices may be any suitable devices that are capable of being detected by the detection devices. The detection devices 7001A-7001E may be spaced apart from each other along the movable member to divide the travel of travel through which the drive unit 1672 drives the fingers 1540. The controller 1220, for example, may be connected to one or more of the registration device 7000 and detecting devices 7001A-7001E and be configured to receive signals from these devices for detecting a position of each of the fingers 1540 as signals from the sensors transition from one detector to the next. As may be realized, while four regions of travel are defined in this example by the five detectors 7001A-7001E, it is noted that any suitable number of detectors may be used so that any suitable number of regions of travel are defined (e.g. two detectors can be used to define a region of travel including the full lift stroke of the fingers while additional detectors may be added to provide stopping points between the upper and lower extremes of the full lift stroke). As may also be realized the signal received by the controller may have a toothed or otherwise sine wave like profile that, for example, has a high value when the registration device 7000 is adjacent one of the detecting devices 7001A-7001E and a low value when the registration device 7000 is between adjacent detecting devices 7001A-7001E.

In one example, when the fingers 1540 selected for activation are substantially at the lowest position (so that the fingers are located beneath the payload bed 1510) the registration device(s) 7000 may be positioned adjacent the detector(s) 7001E. For example, as the drive unit 1672 is actuated to move the selected fingers in the direction of arrow 1673 and the registration device(s) 7000 becomes adjacent detector (s) 7001E, a high signal may be sent from the detector(s) 7001E (while the other detectors 7001A-7001D are providing a low signal) to the controller 1220 for a determination that the selected fingers 1540 are at the lowest position. When the controller 1220 receives the signal from detector (s) 7001E the controller 1220 may send a command to the drive units 1672 for the selected fingers 1540 so that the drive units 1672 are stopped such that the fingers 1540 are located substantially at their lowest position. Similarly, for example, as the drive units 1672 are actuated to move the finger in the direction of arrow 1673 and the registration device(s) 7000 becomes adjacent detector(s) 7001A (e.g. the fingers are substantially at the highest position so that the fingers are above the fence stop members 1510FM for transporting pickfaces to and from the payload bed 1510) a high signal may be sent from the detector(s) 7001A (while the other detectors 7001B-7001E provide a low signal) to the controller 1220 for a determination that the fingers 1540 are at their highest position. When the controller 1220 receives the signal from detector(s) 7001A the controller 1220 may send a command to the drive units 1672 for the selected fingers 1540 so that the drive units 1672 are stopped such that the fingers 1540 are located substantially at their highest position. As may be realized, other detectors 7001B-7001D may be positioned between the detectors 7001A, 7001E to provide other heights at which the fingers can be stopped in the manner described above.

Referring to Fig. 15B, a single detector 7001 may be placed on the movable member 1535 and one or more registration members 7000A-7000E may be placed on the mounting member 1671 adjacent one or more fingers 1540. As the selected finger(s) 1540 are moved in the direction of arrow 1673 a signal may be sent to the controller 1220 by the detector 7001 when each of the registration members 7000A-7000E becomes adjacent the detector 7001. The controller 1220 may be configured to count or otherwise track which registration member 7000A-7000E is adjacent the detector 7001 (such as in the manner described above with respect to Fig. 15A) and send suitable commands to the drive unit(s) 1672 for stopping the finger(s) 1540 at a desired predetermined position (e.g. when the fingers are at their highest position for transferring pickfaces to and from the payload bed, when the fingers are at their lowest position beneath the payload bed, or any suitable position therebetween). It is noted that any suitable combination and types of registration members and detectors may be mounted to any suitable portions of the bot 110 and used for determining the lift height of the fingers 1540.

It is also noted that the location of each of the fingers in the direction of arrow 1673 along the lift axis may be determined from drive unit feedback. For example, each drive unit 1672 may be configured to send signals to the controller 1220 for counting the number of revolutions (or a portion thereof) that the drive unit makes. The controller 1220 may also be configured to track the number of pulses used to drive, for example, the stepper motor drive unit 1672. As may be realized any suitable motor feedback or other information can be used to determine the lift position of each of the fingers 1540.

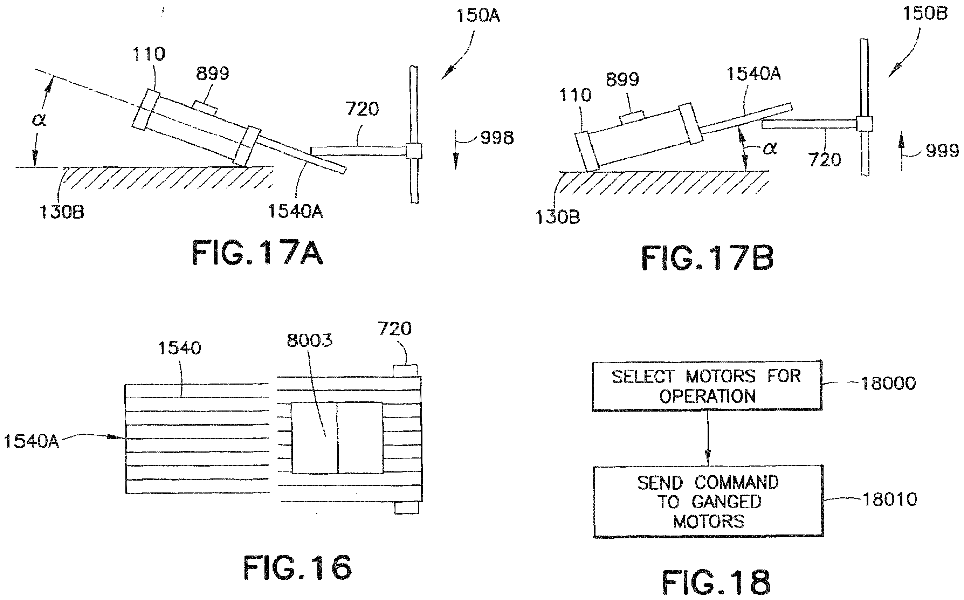

Referring to Figs. 1, 17A and 17B the bot 110 may include any suitable inertial sensor 899 for detecting, for example, a tilt α of the bot 110 from a horizontal plane, such as when the bot is located at a transfer station of the transfer deck 130B. The inertial sensor 899 may allow for the stopping of a multilevel vertical conveyor 150A, 150B if contact is made between the bot and the conveyor or a case carried by the bot and the conveyor (or vice versa) such that the bot 110 tilts beyond a predetermined angle. Fig. 17A illustrates contact between the bot transfer arm 1540A and the shelf 720 of an inbound multilevel vertical conveyor 150A (due to, for exemplary purposes only, a misalignment between fingers of the bot arm and the fingers of the conveyor shelf) such that the motion of the shelf 720 in the direction of arrow 998 causes the bot to tilt. Another instance that may cause the bot to tilt is if the bot arm 1540A is extended too early and a case on either the bot arm or the conveyor shelf prevents the fingers of the bot arm and conveyor shelf from inter-meshing with one another. The inertial sensor 899 may detect the tilt α and send a signal to, for example, the bot controller 1220. The bot controller 1220 may send a corresponding signal to the control server 120 where the control server is configured to stop movement of the conveyor 150A. It is noted that the inertial sensor 899 may also be configured to send a signal directly to the control server 120. The control server 120 may communicate with the bot 110 and be configured to track the position of the bot 110 throughout the storage and retrieval system 100 (as described in, for example, United States Patent Application Number 12/757,337, entitled "CONTROL SYSTEM FOR STORAGE AND RETRIEVAL SYSTEMS") such that the conveyor 150A interacting with the tilting bot 110 can be identified and stopped. In response to the inertial sensor 899 detecting the tilt α of the bot 110, the bot controller 1220 may cause the transfer arm 1540A to be retracted so that the bot 110 can free itself from contact with the conveyor 150A and restore itself to a horizontal orientation. Fig. 17B illustrates contact between the bot transfer arm 1540A and the shelf 720 of an outbound multilevel vertical conveyor 150B such that the motion of the shelf 720 in the direction of arrow 998 causes the bot to tilt in a direction opposite that of Fig. 17A. Stopping of the outbound multilevel vertical conveyor 150B and retraction of the transfer arm 1540A may occur in substantially the same manner as that described above so that the bot 110 can free itself from contact with the outbound multilevel vertical conveyor 150B. It is noted that the bot 110 may be configured to time out (e.g. halt operation) upon detection that the tile α of the bot 110 has exceeded a predetermined amount of tilt so that any suitable corrective action can be taken such as the retracting of the transfer arm described above or to allow for manual intervention.

## Claims

1. A method comprising:
providing an autonomous transport robot (110) for transporting a payload (1700) within a storage and retrieval system (100), the autonomous transport robot (110) including a payload bed (1510) having an opening and an effector (1540A) for transferring the payload (1700) to and from the payload bed (1510) at least partly through the opening, **characterized in that** the method includes
sensing a first and second edge of the payload (1700) with at least one sensor (1703) disposed adjacent the opening; and
with a controller (1220) of the autonomous transport robot (110)
determining a dimension (D) of the payload (1700) based at least in part on the sensing of the first and second edge of the payload (1700), and
comparing the determined dimension (D) of the payload (1700) with a predetermined dimension of the payload (1700).

2. The method of claim 1, further comprising generating, with the controller (1220), a fault signal if the determined dimension (D) and the predetermined dimension do not substantially match.

3. The method of claim 1, further comprising causing, with the controller (1220), the effector (1540A) to return the payload (1700) to a payload holding area from which it came if the determined dimension (D) and the predetermined dimension do not substantially match.

4. The method of claim 1, further comprising verifying, with the controller (1220), a position of the autonomous transport robot (110) within the storage and retrieval system (100) if the determined dimension (D) and the predetermined dimension do not substantially match.

5. The method of claim 4, further comprising re-measuring, with the controller (1220), the determined dimension (D) of the payload (1700).

6. The method of claim 1, further comprising causing, with the controller (1220), the autonomous transport robot (110) to cause the effector (1540A) to redirect the payload (1700) to a payload holding area if the determined dimension (D) and the predetermined dimension do not substantially match.

7. The method of claim 1, further comprising detecting, with the at least one sensor (1713A, 1713B) comprising sensors, other edges of the payload substantially transverse to the first and second edges and determining, with the controller (1220), another dimension (L) of the payload (1700) that is substantially transverse to the dimension (D) based at least in part on the detection of the other edges.

8. The method of claim 7, further comprising moving the payload (1700), with a payload justification device (1510R), in a direction on the payload bed (1510) substantially transverse to a direction (1550) of loading of the payload (1700) onto the payload bed (1510), the payload justification device (1510R) facilitating, at least in part, the detection of the another dimension (L).

9. The method of claim 1, further comprising justifying the payload (1700) to a predetermined position on the payload bed (1510) when the payload is transferred to the payload bed (1510).

10. The method of claim 1, further comprising moving the payload (1510), with a first payload justification device of the autonomous transport robot (110), in a first direction (1551) to substantially contact a first reference datum surface (1510S1, 1510S2).

11. The method of claim 10, further comprising moving the payload, with a second payload justification device (1530) of the autonomous transport robot (110), in a second direction (1550), substantially perpendicular to the first direction, to substantially contact a second reference datum surface (1510F).

12. The method of claim 11, further comprising detecting, with at least one sensor (1713A, 1713B, 1714), the substantial contact between the payload (1700) and at least one of the first and second reference datum surfaces (1510S1, 1510S2, 1510F).

## Patentansprüche

1. Verfahren, umfassend:
Bereitstellen eines autonomen Transportroboters (110) zum Transportieren einer Nutzlast (1700) innerhalb eines Lagerverwaltungssystems (100), wobei der autonome Transportroboter (110) ein Nutzlastbett (1510) beinhaltet, das eine Öffnung und ein Greiforgan (1540A) zum Übergeben der Nutzlast (1700) an das und von dem Nutzlastbett (1510) zumindest teilweise durch die Öffnung aufweist, **dadurch gekennzeichnet, dass** das Verfahren beinhaltet Messen einer ersten und zweiten Kante der Nutzlast (1700) mit mindestens einem Sensor (1703), der angrenzend an die Öffnung angeordnet ist; und
mit einem Steuergerät (1220) des autonomen Transportroboters (110)
Bestimmen einer Abmessung (D) der Nutzlast (1700) mindestens teilweise basierend auf dem Messen der ersten und zweiten Kante der Nutzlast (1700), und
Vergleichen der bestimmten Abmessung (D) der Nutzlast (1700) mit einer vorbestimmten Abmessung der Nutzlast (1700) .

2. Verfahren nach Anspruch 1, weiter umfassend das Generieren, mit dem Steuergerät (1220), eines Fehlersignals, falls die bestimmte Abmessung (D) und die vorbestimmte Abmessung im Wesentlichen nicht übereinstimmen.

3. Verfahren nach Anspruch 1, weiter umfassend das Bewirken, mit dem Steuergerät (1220), dass das Greiforgan (1540A) die Nutzlast (1700) in einen Nutzlasthaltebereich, von dem sie kam, zurückbringt, falls die bestimmte Abmessung (D) und die vorbestimmte Abmessung im Wesentlichen nicht übereinstimmen.

4. Verfahren nach Anspruch 1, weiter umfassend das Überprüfen, mit dem Steuergerät (1220), einer Position des autonomen Transportroboters (110) innerhalb des Lagerverwaltungssystems (100), falls die bestimmte Abmessung (D) und die vorbestimmte Abmessung im Wesentlichen nicht übereinstimmen.

5. Verfahren nach Anspruch 4, weiter das erneute Messen, mit dem Steuergerät (1220), der bestimmten Abmessung (D) der Nutzlast (1700) umfassend.

6. Verfahren nach Anspruch 1, weiter umfassend das Bewirken, mit dem Steuergerät (1220), dass der autonome Transportroboter (110) bewirkt, dass das Greiforgan (1540A) die Nutzlast (1700) zu dem Nutzlasthaltebereich umleitet, falls die bestimmte Abmessung (D) und die vorbestimmte Abmessung im Wesentlichen nicht übereinstimmen.

7. Verfahren nach Anspruch 1, weiter umfassend das Detektieren, mit dem mindestens einen Sensor (1713A, 1713B), Sensoren umfassend, anderer Kanten der Nutzlast im Wesentlichen quer zu der ersten und zweiten Kante und Bestimmen, mit dem Steuergerät (1220), einer anderen Abmessung (L) der Nutzlast (1700), die im Wesentlichen quer zu der Abmessung (D) ist, mindestens teilweise auf der Detektion der anderen Kanten basierend.

8. Verfahren nach Anspruch 7, weiter umfassend das Bewegen der Nutzlast (1700) mit einer Nutzlast-Berechtigungsvorrichtung (1510R), in eine Richtung auf dem Nutzlastbett (1510) im Wesentlichen quer zu einer Richtung (1550) des Ladens der Nutzlast (1700) auf das Nutzlastbett (1510), wobei die Nutzlast-Berechtigungsvorrichtung (1510R) mindestens teilweise die Detektion der anderen Abmessung (L) erleichtert.

9. Verfahren nach Anspruch 1, weiter umfassend das Berechtigen der Nutzlast (1700) in eine vorbestimmte Position auf dem Nutzlastbett (1510), wenn die Nutzlast auf das Nutzlastbett (1510) übergeben wird.

10. Verfahren nach Anspruch 1, weiter umfassend das Bewegen der Nutzlast (1510), mit einer ersten Nutzlast-Berechtigungsvorrichtung des autonomen Transportroboters (110), in eine erste Richtung (1551), um im Wesentlichen eine erste Bezugspunktoberfläche (1510S1, 1510S2) zu berühren.

11. Verfahren nach Anspruch 10, weiter umfassend das Bewegen der Nutzlast, mit einer zweiten Nutzlast-Berechtigungsvorrichtung (1530) des autonomen Transportroboters (110) in eine zweite Richtung (1550) im Wesentlichen senkrecht zu der ersten Richtung, um im Wesentlichen eine zweite Bezugspunktoberfläche (1510F) zu berühren.

12. Verfahren nach Anspruch 11, weiter umfassend das Detektieren, mit mindestens einem Sensor (1713A, 1713B, 1714), des wesentlichen Kontakts zwischen der Nutzlast (1700) und mindestens einer von der ersten und zweiten Bezugspunktoberfläche (1510S1, 1510S2, 1510F).

## Revendications

1. Procédé comprenant :
la fourniture d'un robot de transport autonome (110) pour transporter une charge utile (1700) dans un système de stockage et de récupération (100), le robot de transport autonome (110) incluant un lit de charge utile (1510) ayant une ouverture et un effecteur (1540A) pour transférer la charge utile (1700) vers et depuis le lit de charge utile (1510) au moins partiellement à travers l'ouverture, **caractérisé en ce que** le procédé inclut la détection d'un premier et second bords de la charge utile (1700) avec au moins un capteur (1703) disposé de manière adjacente à l'ouverture ; et
avec un dispositif de commande (1220) du robot de transport autonome (110)
la détermination d'une dimension (D) de la charge utile (1700) sur la base, au moins en partie, de la détection des premier et second bords de la charge utile (1700), et
la comparaison de la dimension (D) déterminée de la charge utile (1700) à une dimension prédéterminée de la charge utile (1700).

2. Procédé selon la revendication 1, comprenant en outre la génération, avec le dispositif de commande (1220), d'un signal de défaillance si la dimension (D) déterminée et la dimension prédéterminée ne correspondent sensiblement pas.

3. Procédé selon la revendication 1, comprenant en outre le fait d'amener, avec le dispositif de commande (1220), l'effecteur (1540A) à renvoyer la charge utile (1700) vers une zone de retenue de charge utile d'où elle est venue si la dimension (D) déterminée et la dimension prédéterminée ne correspondent sensiblement pas.

4. Procédé selon la revendication 1, comprenant en outre la vérification, avec le dispositif de commande (1220), d'une position du robot de transport autonome (110) dans le système de stockage et de récupération (100) si la dimension (D) déterminée et la dimension prédéterminée ne correspondent sensiblement pas.

5. Procédé selon la revendication 4, comprenant en outre la remesure, avec le dispositif de commande (1220), de la dimension (D) déterminée de la charge utile (1700).

6. Procédé selon la revendication 1, comprenant en outre le fait d'amener, avec le dispositif de commande (1220), le robot de transport autonome (110) à amener l'effecteur (1540A) à rediriger la charge utile (1700) vers une zone de retenue de charge utile si la dimension (D) déterminée et la dimension prédéterminée ne correspondent sensiblement pas.

7. Procédé selon la revendication 1, comprenant en outre la détection, avec l'au moins un capteur (1713A, 1713B) comprenant des capteurs, d'autres bords de la charge utile sensiblement transversaux aux premier et second bords et la détermination, avec le dispositif de commande (1220), d'une autre dimension (L) de la charge utile (1700) qui est sensiblement transversale à la dimension (D) sur la base, au moins en partie, de la détection des autres bords.

8. Procédé selon la revendication 7, comprenant en outre le déplacement de la charge utile (1700), avec un dispositif de cadrage de charge utile (1510R), dans une direction du lit de charge utile (1510) sensiblement transversale à une direction (1550) de chargement de la charge utile (1700) sur le lit de charge utile (1510), le dispositif de cadrage de charge utile (1510R) facilitant, au moins en partie, la détection de l'autre dimension (L).

9. Procédé selon la revendication 1, comprenant en outre le cadrage de la charge utile (1700) dans une position prédéterminée sur le lit de charge utile (1510) quand la charge utile est transférée vers le lit de charge utile (1510).

10. Procédé selon la revendication 1, comprenant en outre le déplacement de la charge utile (1510), avec un premier dispositif de cadrage de charge utile du robot de transport autonome (110), dans une première direction (1551) pour être sensiblement en contact avec une première surface de plan de référence (1510S1, 1510S2).

11. Procédé selon la revendication 10, comprenant en outre le déplacement de la charge utile, avec un second dispositif de cadrage de charge utile (1530) du robot de transport autonome (110), dans une seconde direction (1550), sensiblement perpendiculaire à la première direction, pour être sensiblement en contact avec une seconde surface de plan de référence (1510F).

12. Procédé selon la revendication 11, comprenant en outre la détection, avec au moins un capteur (1713A, 1713B, 1714), du contact sensible entre la charge utile (1700) et au moins une des première et seconde surfaces de plan de référence (1510S1, 1510S2, 1510F).
